(19) Europäisches Patentamt
European Patent Office
Office européen des brevets

(11) **EP 1 399 915 B1**

(12) **EUROPEAN PATENT SPECIFICATION**

(45) Date of publication and mention of the grant of the patent:
**18.03.2009 Bulletin 2009/12**

(21) Application number: **02738369.4**

(22) Date of filing: **13.06.2002**

(51) Int Cl.:
*G10L 17/00* (2006.01)

(86) International application number:
**PCT/GB2002/002726**

(87) International publication number:
**WO 2002/103680 (27.12.2002 Gazette 2002/52)**

(54) **SPEAKER VERIFICATION**

SPRECHERVERIFIKATION

VERIFICATION DU LOCUTEUR

(84) Designated Contracting States:
**AT BE CH CY DE DK ES FI FR GB GR IE IT LI LU MC NL PT SE TR**

(30) Priority: **19.06.2001 GB 0114866**
**02.07.2001 US 302501 P**

(43) Date of publication of application:
**24.03.2004 Bulletin 2004/13**

(73) Proprietor: **Speech Sentinel Limited**
**Dundee**
**DD3 0LA (GB)**

(72) Inventor: **SAPELUK, Andrew, Thomas**
**Dundee DD3 0LA (GB)**

(74) Representative: **Kinsler, Maureen Catherine et al**
**Marks & Clerk**
**19 Royal Exchange Square**
**Glasgow**
**G1 3AE (GB)**

(56) References cited:
EP-A- 0 654 781       EP-A- 0 821 346
WO-A-96/41334       WO-A-98/22936

• FINAN R A ET AL: "Improved data modeling for text-dependent speaker recognition using sub-band processing" INTERNATIONAL JOURNAL OF SPEECH TECHNOLOGY, MARCH 2001, KLUWER ACADEMIC PUBLISHERS, NETHERLANDS, vol. 4, no. 1, pages 45-62, XP002211993

• SETHURAMAN R ET AL: "A cepstral based speaker recognition system" SYSTEM THEORY, 1989. PROCEEDINGS., TWENTY-FIRST SOUTHEASTERN SYMPOSIUM ON TALLAHASSEE, FL, USA 26-28 MARCH 1989, WASHINGTON, DC, USA,IEEE COMPUT. SOC. PR, US, 26 March 1989 (1989-03-26), pages 503-507, XP010015578 ISBN: 0-8186-1933-3

• FINAN R A ET AL: "Impostor cohort selection for score normalisation in speaker verification" PATTERN RECOGNITION LETTERS, NORTH-HOLLAND PUBL. AMSTERDAM, NL, vol. 18, no. 9, 1 September 1997 (1997-09-01), pages 881-888, XP004102229 ISSN: 0167-8655

• ACERO A, HUANG X: "Augmented Cepstral Normalization for Robust Speech Recognition" PROC. OF THE IEEE WORKSHOP ON AUTOMATIC SPEECH RECOGNITION, [Online] December 1995 (1995-12), XP002224002 Snowbird Retrieved from the Internet: <URL:http://research.microsoft.com/srg/pap ers/1995-alexac-snowbird.pdf> [retrieved on 2002-12-06]

• CAMPBELLJR J.P.: 'Speaker Recognition: A Tutorial' JOURNAL ARTICLE vol. 85, no. 9, 01 September 1997, XP011043880

**Description**

The present invention relates to a system and a method for performing speaker verification.

Speaker recognition encompasses the related fields of speaker verification and speaker identification. The main objective is to confirm the claimed identity of a speaker from his/her utterances, known as verification, or to recognise the speaker from his/her utterances, known as identification. Both use a person's voice as a biometric measure and assume a unique relationship between the utterance and the person producing the utterance. This unique relationship makes both verification and identification possible. Speaker recognition technology analyses a test utterance and compares it to a known template or model for the person being recognised or verified. The effectiveness of the system is dependent on the quality of the algorithms used in the process.

Speaker recognition systems have many possible applications. Speaker recognition technology may be used to permanently mark an electronic document with a biometric print for every person who views or edits the content. This produces an audit trail identifying all of the users and the times of access and modification. As the user mark is biometric it is very difficult for the user to dispute the authenticity of the mark.

Other biometric measures may provide the basis for possible recognition systems, such as iris scanning, finger printing and facial features. These measures all require additional hardware for recording whereas speaker recognition can be used with any voice input such as over a telephone line or using a standard multi-media personal computer with no modification. The techniques can be used in conjunction with other security measures and other biometrics for increased security. From the point of view of a user the operation of the system is very simple.

For example, when an on-line document is requested the person requiring access will be asked to give a sample of their speech. This will be a simple prompt from the client software '*please say this phrase*..." or something similar. The phrase uttered will then be sent to a database server or to a speech recognition server, via any data network such as an intranet, to be associated with the document and stored as the key used to activate the document at that particular time. A permanent record for a document can therefore be produced, over time, providing an audit trail for the document. The speaker authentication server may maintain a set of templates (models) for all currently enrolled persons and a historical record of previously enrolled persons.

Speaker recognition systems rely on extracting some unique features from a person's speech. This in turn depends on the manner in which human speech is produced using the vocal tract and the nasal tract. For practical purposes, the vocal tract and nasal tract can be regarded as two connected pipes, which can resonate in a manner similar to a musical instrument. The resonances produced depend on the diameter and length of the pipes. In the human speech production mechanism, these diameters and to some extent the length of the pipe sections can be modified by the articulators, typically the positions of the tongue, the jaw, the lips and the soft palate (velum). These resonances in the spectrum are called the formant frequencies. There are normally around four formant frequencies in a typical voice spectrum.

As with musical instruments, sound will only be produced when a constriction of the airflow occurs causing either vibration or turbulence. In human speech, the major vibrations occur when the constriction occurs at the glottis (vocal cords).

When this happens, voiced speech is produced, typically vowel-like sounds. When the constriction is in the mouth, caused by the tongue or teeth, a turbulence is produced, (a hissing type of sound) and the speech produced is called a fricative, typified by "s", "sh", "th" etc. From an engineering point of view, this is similar to a source signal (the result of the constriction) being applied to a filter which has the general characteristics (i.e. the same resonances) of the vocal tract and the resulting output signal is the speech sound. True speech is produced by dynamically varying the positions of the articulators.

All existing speaker recognition systems perform similar computational steps. They operate by creating a template or model for an enrolled speaker. The model is created by two main steps applied to a speech sample, namely spectral analysis and statistical analysis. Subsequent recognition of an input speech sample is performed by modelling the input sample (test utterance) in the same way as during speaker enrolment, and pattern/classification matching of the input model against a database of enrolled speakers. Existing systems vary in the approach taken when performing some or all of these steps. In conventional (industry standard) systems, the spectral analysis is either Linear Predictive Coding (LPC)/Cepstral analysis ("LPCC") or FFT/sub-banding. This is followed by a statistical analysis technique, usually a technique called Hidden Markov Modelling (HMM), and the classification step is a combination of a match against the claimed speaker model and against an "impostor cohort" or "world model" (i.e. a set of other speaker models).

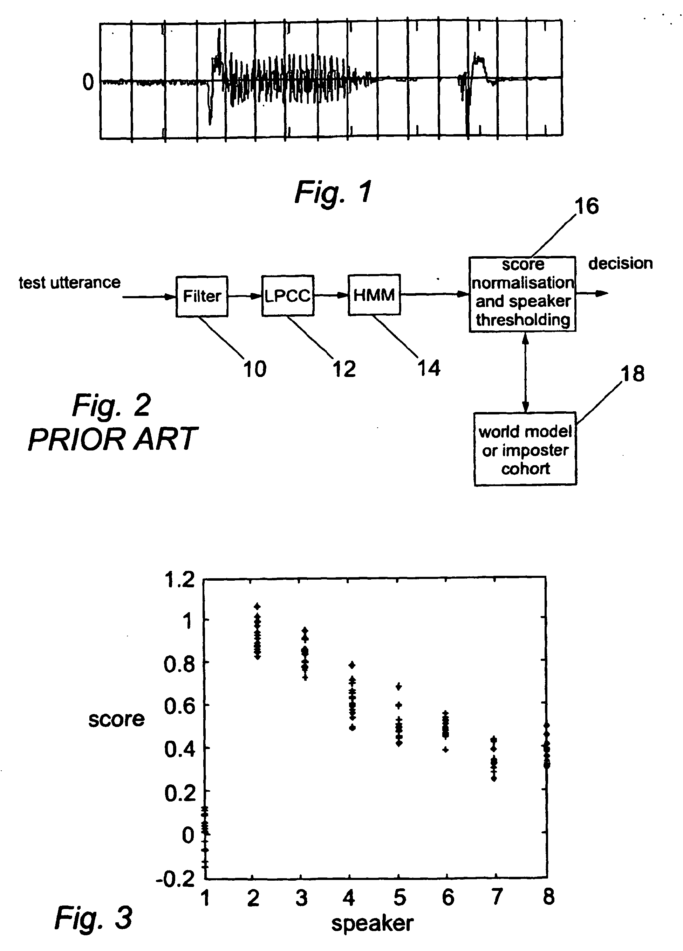

To allow efficient processing of speech samples, all speaker recognition systems use time slices called frames, where the utterance is split into frames and each frame is processed in turn. Frames may or may not be of equal size and may or may not overlap. An example of a typical time signal representation of a speech utterance divided into frames is illustrated in Fig. 1 of the accompanying drawings. A generic speaker recognition system is shown in block diagram form in Fig. 2, illustrating a test utterance being processed, through an input filter 10, a spectral analysis (LPCC) stage 12 and a statistical analysis (HMM) stage 14, followed by score normalisation and speaker classification 16, by thresholding, employing a database 18 of speaker models (enrolled speaker data-set), before generating a decision as to the identity of the speaker (identification) or the veracity of the speaker's claimed identity (verification).

Such systems have a number of disadvantages or limitations. Firstly, conventional spectral analysis techniques produce a limited and incomplete feature set and therefore poor modelling. Secondly, HMM techniques are "black-box" methods, which combine good performance with relative ease of use, but at the expense of transparency. The relative importance of features extracted by the technique are not visible to the designer. Thirdly, the nature of the HMM models do not allow model-against-model comparisons to be made effectively. Accordingly, important structural detail contained within the enrolled speaker data-set cannot be analysed and used effectively to improve system performance. Fourthly, HMM technology uses temporal information to construct the model and is therefore vulnerable to mimics, who impersonate others' voices by temporal variations in pitch etc. Fifthly, the world model/impostor cohort employed by the system cannot easily be optimised for the purpose of testing an utterance by a claimed speaker.

EP-A-0 821 346 discloses a method that performs speaker verification by evaluating a similarity value that is calculated on the basis of distances of a test feature vector to a reference feature vector and to at least one anti-feature vector.

The article "Speaker recognition: A tuturial", J P Campbell Jr, Proc. of the IEEE, vol. 85, No. 9, September 1997, discloses a speaker recognition system wherein the decision criterion is to choose the closest speaker according to the selected feature and measure.

The performance of a speaker recognition system relies on the fact that when a true speaker utterance is tested against a model for that speaker it will produce a score, which is lower than a score that is produced when an impostor utterance is tested against the same model. This allows an accept/reject threshold to be set. Consecutive tests by the true speaker will not produce identical scores. Rather, the scores will form a statistical distribution. However, the mean of the true speaker distribution will be considerably lower than the means of impostor distributions tested against the same model. This is illustrated in Fig. 3, where 25 scores are plotted for each of eight speakers, speaker 1 being the true speaker. It can be seen from Fig. 3 that the scores of some speakers are closer to the true speaker than others and can be problematic.

The present invention relates to improved speaker recognition methods and systems which provide improved performance in comparison with conventional systems.

The various aspects and preferred features of the invention are defined in the Claims appended hereto.

Embodiments of the invention will now be described, by way of example only, with reference to the accompanying drawings, in which:

Fig. 1 is a time signal representation of an example of a speech utterance divided into frames;

Fig. 2 is a block diagram of a generic, prior art speaker recognition system;

Fig. 3 is a plot of speaker recognition score distributions for a number of speakers tested against one of the speakers, obtained using a conventional speaker recognition system;

Fig. 4 is a block diagram illustrating an example;

Fig. 5 is a block diagram illustrating an embodiment of the present invention;

Fig. 6 is a block diagram illustrating a further embodiment of the present invention;

Fig. 7 is a block diagram illustrating a further embodiment of a speaker recognition system in accordance with the present invention;

Fig. 8(a) is a time signal representation of an example of a speech utterance divided into frames and Fig. 8(b) shows the corresponding frequency spectrum and smoothed frequency spectrum of one frame thereof;

Fig. 9 illustrates the differences between the frequency spectra of two mis-aligned frames;

Fig. 10 shows the distribution of accumulated frame scores plotted against their frequency of occurrence;

Fig. 11(a) shows the same accumulated score distributions as Fig. 3 for comparison with Fig. 11(b), which shows corresponding accumulated score distributions obtained using a speaker recognition system in accordance with the present invention;

Fig. 12 illustrates the results of model against model comparisons as compared with actual test scores, obtained using a system in accordance with the present invention;

Fig. 13 illustrates the distribution of speaker models used by a system in accordance with the present invention in a two-dimensional representation of a multi-dimensional dataspace;

Fig. 14 illustrates the use of an impostor cohort as used in a system in accordance with the present invention;

Fig. 15 is a block diagram illustrating a normalisation process in accordance with one aspect of the present invention;

Fig. 16 is a block diagram illustrating an example of wide area user authentication system in accordance with the present invention;

Fig. 17 is a block diagram illustrating the corruption of a speech signal by various noise sources and channel characteristics in the input channel of a speaker recognition system;

Figs. 18 and 19 illustrate the effects of noise and channel characteristics on test utterances and enrolment models in a speaker recognition system; and

Fig. 20 illustrates a channel normalisation method in accordance with one aspect of the present invention.

The present invention includes a number of aspects and features which may be combined in a variety of ways in order to provide improved speaker recognition (verification and/or identification) systems. Certain aspects of the.invention are concerned with the manner in which speech samples are modelled during speaker enrolment and during subsequent recognition of input speech samples. Other aspects are concerned with the manner in which input speech models are classified in order to reach a decision regarding the identity of the speaker. A further aspect is concerned with normalising speech signals input to speaker recognition systems (channel normalisation). Still further aspects concern applications of speaker recognition systems.

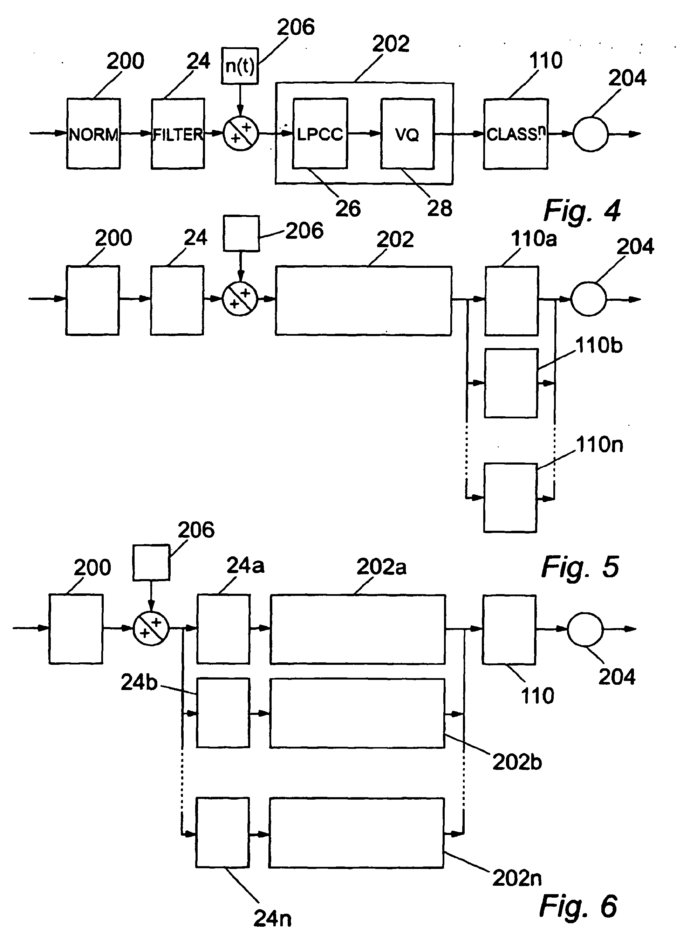

Referring now to the drawings, Figs. 4 to 6 illustrate the basic architectures used in systems embodying various aspects of the invention. It will be understood that the inputs to all of the embodiments of the invention described herein are digital signals comprising speech samples which have previously been digitised by any suitable means (not shown), and all of the filters and other modules referred to are digital.

In Fig. 4, a speech sample is input to the system via a channel normalisation module 200 and a filter 24. Instead of or in addition to this "front-end" normalisation, channel normalisation may be performed at a later stage of processing the speech sample, as shall be discussed further below. The sample would be divided into a series of frames prior to being input to the filter 24 or at some other point prior to feature extraction. In some embodiments, as discussed further below, a noise signal 206 may be added to the filtered signal (or could be added prior to the filter 24). The sample data are input to a modelling (feature extraction) module 202, which includes a spectral analysis module 26 and (at least in the case of speech sample data being processed for enrolment purposes) a statistical analysis module 28. The model (feature set) output from the modelling module 202 comprises a set of coefficients representing the smoothed frequency spectrum of the input speech sample. During enrolment of a speaker, the model is added to a database of enrolled speakers (not shown). During recognition of an input speech sample, the model (feature set) is input to a classification module 110, which compares the model (feature set) with models selected from the database of enrolled speakers. On the basis of this comparison, a decision is reached at 204 so as to identify the speaker or to verify the claimed identity of the speaker. The channel normalisation of the input sample and the addition of the noise signal 206 shall be described in more detail below. In some examples, channel normalisation may be applied following spectral analysis 26 or during the classification process, rather than being applied to the input speech sample prior to processing as shown in Figs. 4 to 6. Novel aspects of the modelling and classification processes in accordance with other aspects of the invention will also be described in more detail below.

Other aspects of the invention involve various types of parallelism in the processing of speech samples for enrolment and/or recognition.

In Fig. 5, the basic operation of the system is the same as in Fig. 4, except that the output from the modelling module 202 is input to multiple, parallel classification processes 110a, 110b ... 110n, and the outputs from the multiple classification processes are combined in order to reach a final decision, as shall be described in more detail below. In Fig. 6, the basic operation of the system is also the same as in Fig. 4, except that the input sample is processed by multiple, parallel modelling processes 202a, 202b ... 202n (typically providing slightly different feature extraction/modelling as described further below), possibly via multiple filters 24a, 24b ... 24n (in this case the noise signal 206 is shown being added to the input signal upstream of the filters 24a, 24b ... 24n), and the outputs from the multiple modelling processes are input to the classification module 110, as shall also be described in more detail below. These types of multiple parallel modelling processes are preferably applied to both enrolment sample data and test sample data.

Multiple parallel modelling processes may also be combined with multiple parallel classification processes; e.g. the input to each of the parallel classification processes 110a-n in Fig. 5 could be the output from multiple parallel modelling processes as shown in Fig. 6.

Various aspects of the invention will now be described in more detail by reference to the modelling, classification and normalisation processes indicated in Figs. 4 to 6.

MODELLING

The spectral analysis modules 26, 26a-n may apply similar spectral analysis methods to those used in conventional speaker recognition systems. Preferably, the spectral analysis applied by the modules 26a-n is of a type that, for each frame of the sample data, extracts a set of feature vectors (coefficients) representing the smoothed frequency spectrum of the frame. This preferably comprises LPC/Cepstral (LPCC) modelling, producing an increased feature set which models the finer detail of the spectra, but may include variants such as delta cepstral or emphasis/de-emphasis of selected coefficients based on a weighting scheme. Similar coefficients may alternatively be obtained by other means such as or Fast Fourier Transform [FFT] or by use of a filter bank.

The complete sample is represented by a matrix consisting of one row of coefficients for each frame of the sample. For the purposes of the preferred embodiments of the present invention, these matrices will each have a size of the order of 1000 (frames) x 24 (coefficients). In conventional systems, a single first matrix of this type, representing the complete original signal, would be subject to statistical analysis such as HMM.

As will be understood by those skilled in the art, the LP transform effectively produces a set of filter coefficients representing the smoothed frequency spectrum for each frame of the test utterance. The LP filter coefficients are related to Z-plane poles. The Cepstral transform has the effect of compressing the dynamic range of the smoothed spectrum, de-emphasising the LP poles by moving them closer to the Z-plane origin (away from the real frequency axis at $z=e^{jw}$). The Cepstral transform uses a log function for this purpose. It will be understood that other similar or equivalent techniques could be used in the spectral analysis of the speech sample in order to obtain a smoothed frequency spectrum and to de-emphasise the poles thereof. This de-emphasis produces a set of coefficients which when transformed back into the time domain are less dynamic and more well balanced (the cepstral coefficients are akin to a time signal or impulse response of the LP filter with de-emphasised poles). The log function also transforms multiplicative processes into additive processes.

The model derived from the speech sample may be regarded as a set of feature vectors based on the frequency content of the sample signal. When a feature vector based on frequency content is extracted from a signal, the order of the vector is important. If the order is too low then some important information may not be modelled. To avoid this, the order of the feature extractor (e.g. the number of poles of an LP filter) may be selected to be greater than the expected order. However, this in itself causes problems. Poles which match resonances in the signal give good results, whilst the other resulting coefficients of the feature vector will model spurious aspects of the signal. Accordingly, when this vector is compared with another model or reference, the distance measure computed may be unduly influenced by the values of those coefficients which are modelling spurious aspects of the signal. The distance measure (score) which is returned will thus be inaccurate, possibly giving a poor score for a frame which in reality is a good match.

In accordance with one aspect of the invention, this problem can be obviated or mitigated by adding a noise signal n(t) (206 in Figs. 4 - 6) having known characteristics to the speech signal s(t) before the signal is input to the modelling process (i.e. the input signal = s(t)+n(t)). The same noise signal would be used during enrolment of speakers and in subsequent use of the system. The addition of the known noise signal has the effect-of forcing the "extra" coefficients (above the number actually required) to model a known function and hence to give consistent results which are less problematic during model/test vector comparison. This is particularly relevant for suppressing the effect of noise (channel noise and other noise) during "silences" in the speech sample data. This problem may also be addressed as a consequence of the use of massively overlapping sample frames discussed below.

As previously mentioned, in order to allow efficient processing of speech samples all speaker recognition systems use time slices called frames, so that the utterance is split into a sequence of frames and each frame is processed in turn. The frames may or may not be of equal size and they may overlap. Models generated by speaker recognition systems thus comprise a plurality of feature sets (vectors corresponding to sets of coefficients) representing a plurality of frames. When models are compared in conventional speaker recognition systems it is necessary to align corresponding frames of the respective models. Different utterances of a given phrase will never be exactly the same length, even when spoken by the same person. Accordingly, a difficulty exists in correctly aligning frames for comparison.

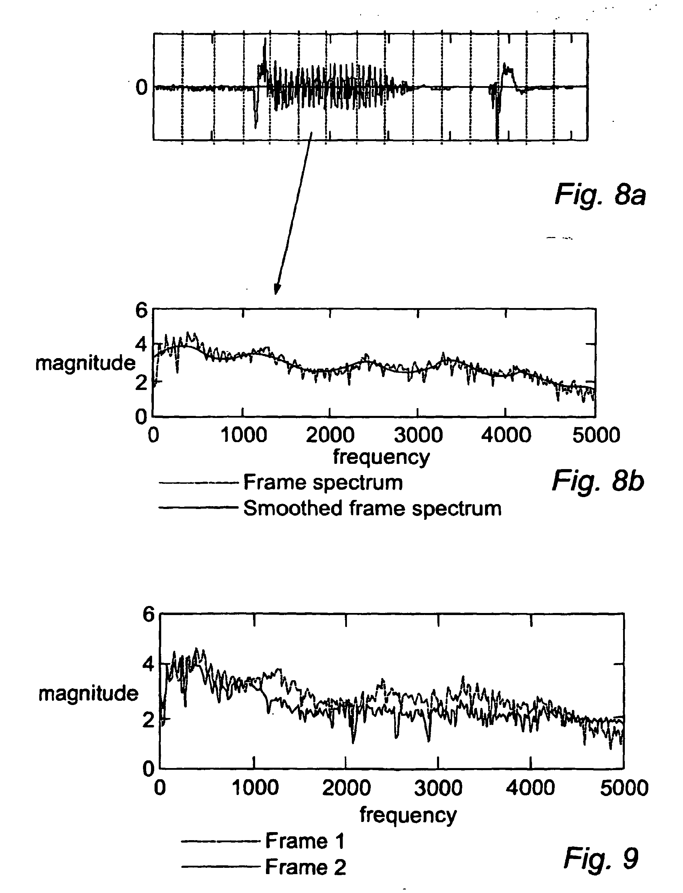

Conventional systems convert the frames into a spectral or smoothed spectral equivalent as shown in Figs. 8 (a) (showing a time signal divided into frames) and 8(b) (showing the corresponding frequency spectrum and smoothed frequency spectrum of one of the frames of Fig. 8(a)). The systems then perform further transformations and analysis (such as Cepstral transformation, Vector Quantisation, Hidden Markov Modelling (HMM) and Dynamic Time Warping (DTW)) to obtain the desired result. Frame boundaries can be allocated in many ways, but are usually measured from an arbitrary starting point estimated to be the starting point of the useful speech signal. To compensate for this arbitrary starting point, and also to compensate for the natural variation in the length of similar sounds, techniques such as HMM and DTW are used when comparing two or more utterances such as when building models or when comparing models with test utterances. The HMM/DTW compensation is generally done at a point in the system following spectral analysis, using whatever coefficient set is used to represent the content of a frame, and does not refer to the original time signal. The alignment precision is thus limited to the size of a frame. In addition, these techniques assume that the alignment of a particular frame will be within a fixed region of an utterance which is within a few frames of where it is expected to lie. This introduces a temporal element to the system as the estimated alignment of the current frame depends on the alignment of previous frames, and the alignment of subsequent frames depends on the alignment of the present frame. In practice, this means that a particular frame, such as a frame which exists 200 ms into an utterance, will in general only be compared with other frames in the 200 ms region of the model or of other utterances being used to construct a model. This approach derives from speech recognition methods (e.g. speech-to-text conversion), where it is used to estimate a phonetic sequence from a series of frames. The present applicants believe that this approach is inappropriate for speaker recognition, for the following reasons.

A. Most seriously, the conventional approach provides only crude alignment of frames. The arbitrary allocation of starting points means that it will generally not be possible to obtain accurate alignment of the starting points of two respective frames, so that even two frames giving a "best match" may have significantly different spectral characteristics, as illustrated in Fig. 9.

B. Secondly, the conventional approach relies on the temporal sequence of the frames and bases speaker verification on spectral characteristics derived from temporally adjacent frames.

In accordance with a further example, the present enrolment modelling process involves the use of very large frame overlaps, akin to convolution, to avoid problems arising from frame alignment between models (discussed at A. above) and to improve the quality of the model obtained. This technique is applied during speaker enrolment in order to obtain a model, preferably based on repeated utterances of the enrolment phrase. By massively overlapping the frames, the resulting model effectively approaches a model of all possible alignments, with relatively small differences between adjacent frames, thereby providing good modelling of patterns. Preferably, the frame overlap is selected to be at least 80%, more preferably it is in the range 80% to 90%, and may be as high as 95%.

The frames are transformed into representative coefficients using the LPCC transformation as described above, so that each utterance employed in the reference model generated by the enrolment process is represented by a matrix (typically having a size of the order of 1000 frames by 24 coefficients as previously described). There might typically be ten such matrices representing ten utterances. A clustering or averaging technique such as Vector Quantisation (described further below) is then used to reduce the data to produce the reference model for the speaker. This model does not depend on the temporal order of the frames, addressing the problems described at B. above.

Examples combine the massive overlapping of frames described above with Vector Quantisation or the like as described below. This provides a mode of operation which is quite different from conventional HMM/DTW systems. In such conventional systems, all frames are considered equally valid and are used to derive a final "score" for thresholding into a yes/no decision, generally by accumulating scores derived by comparing and matching individual frames. The validity of the scores obtained is limited by the accuracy of the frame alignments.

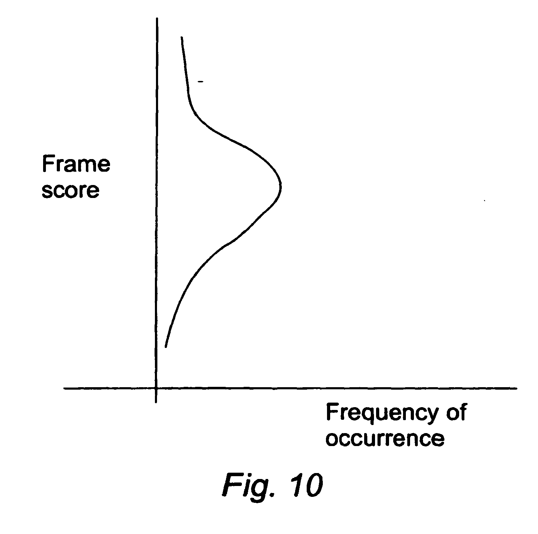

In accordance with this example, the reference (enrolment) models represent a large number of possible frame alignments. Rather than matching individual frames of a test utterance with individual frames of the reference models and deriving scores for each matched pair of frames, this allows all frames of the test utterance to be compared and scored against every frame of the reference model, giving a statistical distribution of the frequency of occurrence of frame score values. "Good" frame matches will yield low scores and "poor" frame matches will yield high scores (or the converse, depending on the scoring scheme). A test utterance frame tested against a large number of reference models will result in a normal distribution as illustrated in Fig. 10. Most frame scores will lie close to the mean and within a few standard deviations therefrom. Because of the massive overlapping of frames in the reference models, the score distributions will include "best matches" between accurately aligned corresponding frames of the test utterance and reference models. When a test utterance from a particular speaker is tested against the reference model for that speaker, the distribution will thus include a higher incidence of very low scores. This ultimately results in "true speaker" scores being consistently low due to some parts of the utterance being easily identified as originating from the true speaker while other parts less obviously from the true speaker are classified by being from the general population. Impostor frame scores will not produce low scores and will be classified as being from the general population.

That is, in accordance with this example, the reference models comprise sets of coefficients derived for a plurality of massively overlapping frames, and a test utterance is tested by comparing all of the frames of the test utterance with all of the frames of the relevant reference models and analysing the distribution of frame scores obtained therefrom.

The massive overlapping of frames applied to speech samples for enrolment purposes may also be applied to input utterances during subsequent speaker recognition, but this is not necessary.

The use of massive overlaps in the enrolment sample data is also beneficial in dealing with problems arising from noise present in periods of silence in the sample data. Such problems are particularly significant for text-independent speaker recognition systems. The existence of silences may or may not cause problems for an individual model or verification attempt, but they will cause deterioration in the overall system performance. The question is therefore how do we remove this completely or minimise the adverse effect. The use of massive frame overlaps in the present invention contains an inherent solution. Consider the equations, which describe averaging the frame spectra (discussed in more detail below),

$$\overline{s(\omega)} = \frac{1}{N}\sum_n s_n(\omega) \qquad = \qquad \frac{1}{N}\sum_n (ss_n(\omega) \times sd_n(\omega))$$

$$=$$

$$\frac{1}{N}(ss_1(\omega) \times sd_1(\omega)) + (ss_2(\omega) \times sd_2(\omega)) + \ldots\ldots(ss_N(\omega) \times sd_N(\omega))$$

$$=$$

$$ss(\omega) \times \frac{1}{N}(sd_1(\omega) + sd_2(\omega) + \ldots\ldots sd_2(\omega)\ldots\ldots + sd_N(\omega))$$

It can be seen that the static parts (ss) average to $ss(\omega)$ and that individual frames have the spectra $ss_n(\omega) \times sd_n(\omega)$. Consider however the spectra of two added frames,

$$(ss_1(\omega) \times sd_1(\omega)) + (ss_2(\omega) \times sd_2(\omega)) = ss(\omega) \times (sd_1(\omega) + sd_2(\omega))$$

we have the steady part multiplied by a new spectra $sd_1(\omega)+sd_2(\omega)$. But since it is to be reduced by averaging, and it is also dynamic or variable in nature, the new spectra should behave in exactly the same way as a randomly extracted frame. The implication of this is that frames could be randomly added together with minimal effect on performance. This observation is not entirely true since we can have the case of valid speech frames added to silence frames in which the net result is a valid speech frame. This in fact results in an improvement in performance, as we are no longer including unwanted silences in the modelling.

If a typical signal with some minor silence problems has time frames randomly added, the silences would be eliminated but the signal would appear to have undergone major corruption. However the present invention using massively overlapped frames still functions. Interestingly, the implication of this is that channel echoes have no effect and can be ignored. It also underlines the fact that the preferred operating modes of the present invention extract the static parts of the spectra to a larger extent than conventional verifiers (as discussed further below). The addition of frames in this way has substantially the same effect as adding coloured noise to prevent unwanted modelling as discussed above.

In accordance with another aspect, the invention uses clustering or averaging techniques such as Vector Quantisation applied by the modules 28, 28a-n in a manner that differs from statistical analysis techniques used in conventional speaker recognition systems.

Preferably, the system of the present invention uses a Vector Quantisation (VQ) technique in processing the enrolment sample data output from the spectral analysis modules 26, 26a-n. This is a simplified technique, compared with statistical analysis techniques such as HMM employed in many prior art systems, resulting in transparent modelling providing models in a form which allow model-against-model comparisons in the subsequent classification stage. Also, VQ as deployed in the present invention does not use temporal information, making the system resistant to impostors.

The VQ process effectively compresses the LPCC output data by identifying clusters of data points, determining average values for each cluster, and discarding data which do not clearly belong to any cluster. This results in a set of second matrices of second coefficients, representing the LPCC data of the set of first matrices, but of reduced size (typically, for example, 64 x 24 as compared with 1000 x 24).

The effects of the use of LPCC spectral analysis and clustering/averaging in the present invention will now be discussed.

The basic model assumes that spectral magnitude is useful and that the phase may be disregarded. This is known to apply to human hearing and if it was not applied to a verifier the system would exhibit undesirable phase related problems, such as sensitivity to the distance of the microphone from the speaker. Further assume that the spectral information of a speech sample can be regarded as consisting of two parts a static part $ss(\omega)$ and a dynamic part $sd(\omega)$ and that the processes are multiplicative. It is also assumed that the dynamic part is significantly larger than the static part.

$$s(\omega) = ss(\omega) \times sd(\omega)$$

As, by definition, the static part is fixed it is the more useful as a biometric as it will be related to the static characteristics of the vocal tract. This will relate the measure to some fixed physical characteristic as opposed to $sd(\omega)$ which is related to the dynamics of the speech.

The complete extraction of $ss(\omega)$ would give a biometric which exhibits the properties of a physical biometric, i.e. cannot be changed at will and does not deteriorate over time. Alternatively the exclusive use of $sd(\omega)$ will give a biometric which exhibits the properties of a behavioral biometric, i.e. can be changed at will and will deteriorate over time. A mixture of the two should exhibit intermediate properties but as $sd(\omega)$ is much larger than $ss(\omega)$ it is more likely that a combination will exhibit the properties of $sd(\omega)$; i.e. behavioral.

As with all frequency representations of a signal the assumption is that the time signal exists from $-\infty$ to $+\infty$ which clearly is not physically possible. In practice all spectral estimates of a signal will be made using a window, which exists for a finite period of time. The window can either be rectangular or shaped by a function (such as a Hamming window).

The use of a rectangular window amounts to simply taking a section of a signal in the area of interest and assuming that it is zero elsewhere. This technique is common in speech processing in which the sections of signal are called frames; Fig. 1 shows a time signal with the frames indicated.

The frames can be shaped using an alternate window. Interestingly, the major effect of windowing is a spreading of the characteristic of a particular frequency to its neighbours, a kind of spectral averaging. This effect is caused by the main lobe; in addition to this the side lobes produce spectral oscillations, which are periodic in the spectrum. The present system later extracts the all-pole Linear Prediction coefficients, which have the intended effect of spectral smoothing and the extra smoothing, caused by the windowing, is not seen as a major issue. However, the periodic side lobe effects might be troublesome if the window size was inadvertently changed. This however can be avoided by good housekeeping.

Given that we can divide the time signal into frames the spectral characteristics for frames 1 to N can be represented as

$$s_1(\omega) = ss_1(\omega) \times sd_1(\omega) \quad ; \quad s_2(\omega) = ss_2(\omega) \times sd_2(\omega) \quad ; \quad \bullet \qquad \bullet \qquad \bullet$$

$$\bullet \qquad \bullet \qquad \bullet \qquad \bullet \qquad \bullet \qquad \bullet \qquad \bullet$$

$$s_n(\omega) = ss_n(\omega) \times sd_n(\omega) \quad ; \quad \bullet \qquad \bullet \qquad \bullet \qquad \bullet$$

$$s_N(\omega) = ss_N(\omega) \times sd_N(\omega)$$

But by definition

$$ss(\omega) = ss_1(\omega) = ss_2(\omega) = ss_3(\omega) \qquad \bullet \qquad \bullet \qquad \bullet \qquad = ss_N(\omega)$$

On first impressions to extract $ss(\omega)$ would seem to be possible using an averaging process,

$$\overline{s(\omega)} = \frac{1}{N}\sum_{n} s_n(\omega) \qquad = \qquad \frac{1}{N}\sum_{n}(ss_n(\omega) \times sd_n(\omega))$$

$$=$$

$$\frac{1}{N}(ss_1(\omega) \times sd_1(\omega)) + (ss_2(\omega) \times sd_2(\omega)) + \ldots(ss_N(\omega) \times sd_N(\omega))$$

$$=$$

$$ss(\omega) \times \frac{1}{N}(sd_1(\omega) + sd_2(\omega) + \ldots sd_2(\omega)\ldots + sd_N(\omega)) \qquad = \qquad ss(\omega) \times U(\omega)$$

where,

$$U(\omega) = \frac{1}{N}(sd_1(\omega) + sd_2(\omega) + \ldots sd_2(\omega)\ldots + sd_N(\omega))$$

If the frames had independent spectral characteristics (each resulting from random process) then U($\omega$) would tend to white noise, i.e. would have a flat spectrum so that $\overline{s(\omega)}$ could be extracted by smoothing the spectrum. This would most likely be the case if N were very large $\rightarrow\infty$. Given the linear nature of the *time domain - frequency domain - time* domain transformations a similar analysis could have been described in the time domain.

For real world conditions it cannot be assumed that N would be large in the sense that the frames have independent spectral characteristics. It is important to remember that this would require N to be large under two conditions:

1. During model creation
2. During a verification event

Failure to comply during either would potentially cause a system failure (error), however a failure in 1 is the more serious as it would remain a potential source of error until updated, whereas a problem in 2 is a single instance event.

If U($\omega$) cannot be guaranteed to converge to white noise, what can be done to cope with the situation? First consider that:

1. U($\omega$) will be a variable quantity
2. When smoothed across the frequency spectrum it would ideally be flat; i.e. the smoothed version Usm($\omega$)=1
3. U($\omega$) is the truncated sum of the speech frames the number of which would ideally tend to infinity.

Considering the equation

$$\overline{s(\omega)} = ss(\omega) \times \frac{1}{N}\sum_{n} sd_n(\omega)$$

The summation part tending to a flat spectrum is not an ideal performance measure, if we return to the frame based equivalent:

$$\overline{s(\omega)} = \frac{1}{N}\sum_{n}(ss_n(\omega) \times sd_n(\omega))$$

If we take the logarithms of the frames:

$$\frac{1}{N}\sum_{n}\log((ss_n(\omega)\times sd_n(\omega))$$

$$=\frac{1}{N}\sum_{n}\left[\log(ss_n(\omega))+\log(sd_n(\omega))\right]=\log(ss(\omega))+\frac{1}{N}\sum_{n}\log(sd_n(\omega))$$

$$=lss(\omega)+lsd(\omega)$$

it can be seen that the relationship between the static and dynamic parts is now additive. Because the relationship between the time domain and the frequency domain is linear a transformation from frequency to time gives:

$$lss(\omega)+lsd(\omega)\rightarrow cs(\tau)+cd(\tau)=c(\tau)$$

In signal processing $c(\tau)$ is known as the Cepstral transformation of s(t) as discussed previously.

In general cepstral analysis consists of time_domain $\rightarrow$frequency_domain $\rightarrow$log(spectrum) $\rightarrow$time_domain The Cepstral transformation has been used in speech analysis in many forms.

As discussed above, in our current usage we create the Cepstral coefficients for the frames and extract the static part,

$$\frac{1}{N}\sum_{n}c_n(\tau)=\frac{1}{N}\sum_{n}(cs_n(\tau)+cd_n(\tau))=cs(\tau)+\frac{1}{N}\sum_{n}cd_n(\tau)$$

Ideally the length of the speech signal would be long enough so that the dynamic part was completely random and the mean would tend to zero. This would leave the static part cs(t) as our biometric measure. However, we have a number of problems to overcome.

    1. How do we handle the imperfect nature of the sum-to-zero
    2. channel variation
    3. endpointing
    4. additive noise

Referring to the imperfect nature of the sum-to-zero, the nature of the Cepstral coefficients are such that they decay with increasing time and have the appearance of an impulse response for stable systems. This means that the dynamic range of each coefficient is different and they are in general in descending order.

It can be shown that the differences between the average coefficients of a test sample and the frame coefficient values for the true speaker model and the frame coefficient values of an impostor model are not large and a simple summation over all of the utterance frames to produce a distance score will be difficult to threshold in the conventional manner.

If we consider the two difficult problems associated with this methodology together rather than separately the answer to the problem is revealed. To re-emphasise, the two points of difficulty are,

    1. the utterances will never be long enough for the mean of the dynamic part to converge to zero
    2. the differences between the true speaker and the impostors will be small and difficult to threshold.

Consider two speakers with models based upon

$$\overline{c(\tau)} = \frac{1}{N}\sum_n c_n(\tau) = \frac{1}{N}\sum_n (cs_n(\tau) + cd_n(\tau)) = cs(\tau) + \frac{1}{N}\sum_n cd_n(\tau)$$

so that the models are m1($\tau$) and m2($\tau$), where,

$$m1(\tau) = \overline{c1(\tau)} = \frac{1}{N}\sum_n c1_n(\tau) = \frac{1}{N}\sum_n (cs1_n(\tau) + cd1_n(\tau)) = cs1(\tau) + \frac{1}{N}\sum_n cd1_n(\tau)$$

$$= cs1(\tau) + e1(\tau) \qquad ;$$

where e1($\tau$) is the error

In vector form the models are

$$m1 = \begin{bmatrix} cs1_1 + e1_1 \\ cs1_2 + e1_2 \\ \bullet \\ \bullet \\ cs1_p + e1_p \end{bmatrix} \quad \text{and} \quad m2 = \begin{bmatrix} cs2_1 + e2_1 \\ cs2_2 + e2_2 \\ \bullet \\ \bullet \\ cs2_p + e2_p \end{bmatrix}$$

A test utterance from speaker 1 expressed in the same form will be

$$T1 = \begin{bmatrix} cs1_1 + Te1_1 \\ cs1_2 + Te1_2 \\ \bullet \\ \bullet \\ cs1_p + Te1_p \end{bmatrix}$$

using a simple distance measure true speaker distance is

$$d1 = |m1 - T1| = \left| \begin{bmatrix} cs1_1 + e1_1 \\ cs1_2 + e1_2 \\ \bullet \\ \bullet \\ cs1_p + e1_p \end{bmatrix} - \begin{bmatrix} cs1_1 + Te1_1 \\ cs1_2 + Te1_2 \\ \bullet \\ \bullet \\ cs1_p + Te1_p \end{bmatrix} \right| = |e1 - Te1|$$

impostor distance is

$$d2 = |m2 - T1| = \begin{bmatrix} cs2_1 + e2_1 \\ cs2_2 + e2_2 \\ \bullet \\ \bullet \\ cs2_p + e2_p \end{bmatrix} - \begin{bmatrix} cs1_1 + Te1_1 \\ cs1_2 + Te1_2 \\ \bullet \\ \bullet \\ cs1_p + Te1_p \end{bmatrix} = |cs2 - cs1 + e2 - Te1|$$

Assuming that the convergence of the dynamic parts of the models is good (i.e. that the error vectors are small compared to the static vectors) then in general d1<d2. This is simply stating that the models built represent the enrolled speaker (a condition that can easily checked during enrolment using the data available at that time). Interestingly, if e1 and e2 are small compared to the test signal error Te1 the distances become independent of e1 and e2. The condition under which the test error will be large when compared to the model error is during text-independent test conditions. This shows that if the dynamic components of the enrolment speech samples are minimised in the enrolment models then such models can provide a good basis for text-independent speaker recognition

The errors e1 and e2 above are average model construction errors; the actual errors are on a frame by frame basis and will have a distribution about the mean. This distribution could be modelled in a number of ways the simplest being by use of a standard clustering technique such as k-means to model the distribution. The use of k-means clustering is also known in other forms as Vector Quantisation (VQ) and is a major part of the Self Organising Map (SOM) also known as the Kohonen Artificial Neural Network.

The system just described where a test utterance is applied to two models and the closest chosen is a variant of identification. In the above case if either speaker 1 or speaker 2, the enrolled speakers, claim to be themselves and are tested they will always test as true and so the False Rejection Rate FRR =0. If an unknown speaker claims to be either speaker1 or speaker2 he will be classified as one or the other, so there is a 1/2 chance of success and hence a False Acceptance Rate FAR =50%. If an equal number of true speaker tests and random impostor tests were carried out, we can calculate an overall error rate as (FRR+FAR)/2 = (0+0.5)/2=25%

It is obvious that the number of models (the cohort) against which the test utterance is tested will have an effect on the FAR and it will reduce as the cohort increases. It can be shown that the accuracy of recognition under these conditions is asymptotic to 100% with increasing cohort size, since FRR=0, but as the accuracy is

$$accuracy = 100 - (FRR + FAR)\frac{100}{2} = 100 - \left(FRR + \frac{1}{cohort\_size}\right)\frac{100}{2}$$

it is in more general terms asymptotic to 100-FRR.

It is worth observing at this point that the FRR and FAR are largely decoupled: the FRR is fixed by the quality of the model produced and the FAR is fixed by the cohort size. It is also worth observing that to halve the error rate we need to double the cohort size e.g. for 99% accuracy the cohort is 50, for 99.5% accuracy the cohort is 100, for 99.75% accuracy the cohort is 200. As the cohort increases the computational load increases and in fact doubles for each halving of the error rate. As the cohort increases to very large numbers the decoupling of the FRR and FAR will break down and the FRR will begin to increase.

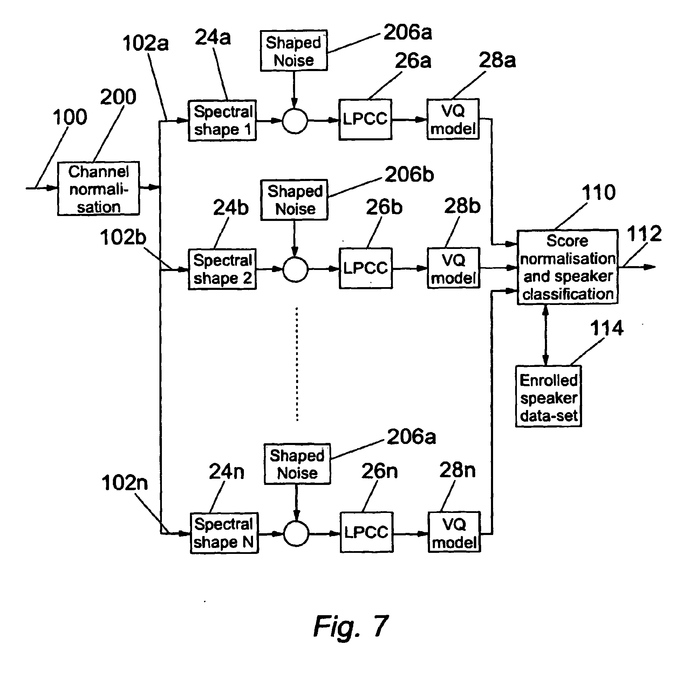

Rather than continually increasing the cohort size in an attempt to reduce the FAR to a minimum another approach is needed. The approach, in accordance with one aspect of the invention, is to use parallel processes (also discussed elsewhere in the present description), which exhibit slightly different impostor characteristics and are thus partially statistically independent with respect to the identifier strategy. The idea is to take a core identifier which exhibits the zero or approximately zero FRR and which has a FAR that is set by the cohort size. The front end processing of this core identifier is then modified slightly to reorder the distances of the cohort member models from the true speaker model. This is done while maintaining the FRR~0 and can be achieved by altering the spectral shaping filters 24a-24n (see Fig. 7), or by altering the transformed coefficients, such as by using delta-ceps etc.

When an enrolled speaker uses the system the test signal is applied to all of the processes in parallel but each process has a FRR~0 and the speaker will pass. When an unknown impostor uses the system he will pass each individual process with a probability of 1/cohort_size. However with the parallel processes we have introduced conditional probabilities. That is, if an impostor passes process1 what is the likelihood of him passing the modified process2 as well etc.

Although the probability of an impostor passing all of the processes is not that of the statistically independent case of

$$statistically \_ independent \_ result = process \_ prob^{no - of - processes}$$

it does however reduce with the addition of processes. It can be shown that for a given process FAR value, the overall accuracy of the system increases with the number of processes.

Where multiple parallel processes are used in this way, the scheme for matching a test sample against a claimed identity may require a successful match for each process or may require a predetermined proportion of successful matches.

The combined use of massive sample frame overlaps and Vector Quantisation (or equivalent) in building enrolment models provides particular advantages. The massive overlapping is applied at the time of constructing the models, although it could also be applied at the time of testing an utterance. The technique involves using a massive frame overlap, typically 80-90%, to generate a large possible number of alignments; the frames generated by the alignments are then transformed into representative coefficients using the LPCC transformation to produce a matrix of coefficients representing all of the alignments. This avoids conventional problems of frame alignment. The matrix is typically of the size no_of_frames by LPCC_order, for example 1000x24. This is repeated for all of the utterances used in constructing the model, typically 10, Giving 10 matrices of 1000x24. Vector Quantisation is then used to reduce the data to produce a model for the speaker. This has the effect of averaging the frames so as to reduce the significance of the dynamic components of the sampled speech data as discussed above. The resulting model does not take cognisance of the frame position in the test utterance and is hence not temporal in nature. This addresses the problem of temporal dependency.

The combined use of VQ and massive frame overlapping produces an operation mode which is different from conventional systems based upon HMM/DTW. In HMM/DTW all frames are considered to be equally valid and are used to form a final score for thresholding into a yes/no decision. In the present invention every row (frame) of the test sample data is tested against every row of the enrolment model data for the claimed speaker and the associated impostor cohort. For each row of the test sample data, a best match can be found with one row of the enrolment model, yielding a test score for the test sample against each of the relevant enrolment models. The test sample is matched to the enrolment model that gives the best score. If the match is with the claimed identity, the test speaker is accepted. If the match is with an impostor the test speaker is rejected.

The present system, then, uses LPCC and VQ modelling (or similar/equivalent spectral analysis and clustering techniques), together with massive overlapping of the sample frames, to produce the reference models for each enrolled speaker, which are stored in the database. In use of the system, an input test utterance is subjected to similar spectral analysis to obtain an input test model which can be tested against the enrolled speaker data-set. Advantageously, this approach can be applied so as to obtain a very low False Rejection Rate (FRR), substantially equal to zero. The significance of this is discussed further below.

Parallel Modelling

As previously discussed, the performance of speaker recognition systems in accordance with the invention can be improved by using multiple parallel processes to generate the model.

Referring now to Fig. 7 of the drawings, one preferred embodiment of a speaker recognition system employing parallel modelling processes in accordance with one aspect of the invention comprises an input channel 100 for inputting a signal representing a speech sample to the system, a channel normalisation process 200 as described elsewhere, a plurality of parallel signal processing channels 102a, 102b ... 102n, a classification module 110 and an output channel 112. The system further includes an enrolled speaker data-set 114; i.e. a database of speech models obtained from speakers enrolled to use the system. The speech sample data is processed in parallel by each of the processing channels 102a-n, the outputs from each of the processing channels is input to the classification module 110, which communicates with the database 114 of enrolled speaker data, and a decision as to the identity of the source of the test utterance is output via the output channel 112.

Each of the processing channels 102a-n comprises, in series, a spectral shaping filter 24a-n, an (optional) added noise input 206a-n, as described elsewhere, a spectral analysis module 26a-n and a statistical analysis module 28a-n. The outputs from each of the statistical analysis modules 28a-n is input to the classification module 110.

The spectral shaping filters 24a-n comprise a bank of filters which together divide the utterance signal into a plurality of overlapping frequency bands, each of which is then processed in parallel by the subsequent modules 26a-n and 28a-n. The number of processing channels, and hence the number of frequency bands, may vary, with more channels providing more detail in the subsequent analysis of the input data. Preferably, at least two channels are employed, more preferably at least four channels. The filters 24a-n preferably constitute a low-pass or band-pass or high-pass filter bank. The bandwidth of the base filter 24a is selected such that the False Rejection Rate (FRR) resulting from subsequent analysis of the output from the first channel 102a is zero or as close as possible to zero. The subsequent filters 24b-n have incrementally increasing bandwidths that incrementally pass more of the signal from the input channel 100. The FRR for the output from each channel 102a-n is thus maintained close to zero whilst the different channel outputs have slightly different False Acceptance (FA) characteristics. Analysis of the combined outputs from the channels 102a-n yields a reduced overall FA rate (a claimed identity is only accepted if the outputs from all of the channels are accepted) with a FRR close to zero. The significance of this is discussed further below.

The use of multiple frequency bands improves upon conventional single-channel spectral analysis, increasing the size of the feature vectors of interest in the subsequent statistical analysis.

It will be understood that different types of parallel processing may be employed in the modelling process in order to provide multiple feature sets modelling different (related or unrelated) aspects of the input speech sample and/or alternative models of similar aspects. Banks of filters of other types in addition to or instead of low pass filters might be employed. Different types or variants of spectral and/or statistical analysis techniques might be used in parallel processing channels. Parallel statistical analyses may involve applying different weighting values to sets of feature coefficients so as to obtain a set of slightly deviated models.

It will be understood that the architecture illustrated in Fig. 7 may be used for both obtaining enrolment models for storing in the database 114 and for processing test speech samples for testing against the enrolment models. Each enrolment model may include data-sets for each of a plurality of enrolment utterances. For each enrolment utterance, there will be a matrix of data representing the output of each of the parallel modelling processes. Each of these matrices represents the clustered/averaged spectral feature vectors. Test sample data is subject to the same parallel spectral analysis processes, but without clustering/averaging, so that the test model data comprises a matrix representing the spectral analysis data for each of the parallel modelling processes. When a test model is tested against an enrolment model, the test matrix representing a particular modelling process is tested against enrolment matrices generated by the same modelling process.

CLASSIFICATION

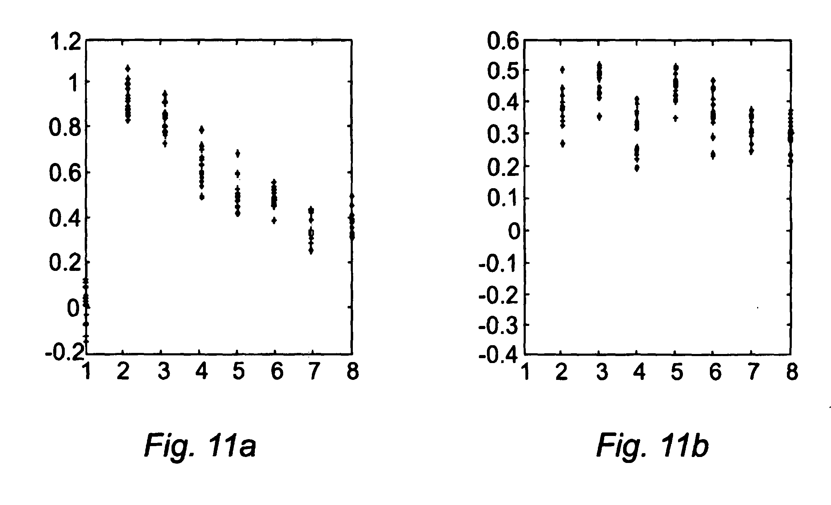

The nature of the reference models obtained by the modelling techniques described above is such that they lend themselves to direct model against model comparisons. This enables the system to employ an identifier strategy in which each enrolment model is associated with an impostor cohort. That is, for the reference model of each enrolled speaker ("subject"), there is an impostor cohort comprising a predetermined number of reference models of other enrolled speakers, specific to that subject and which has a known and predictable relationship to the subject's reference model. These predictable relationships enable the performance of the system to be improved. Fig. 11(a) shows the results obtained by a conventional speaker recognition system, similar to Fig. 3, comparing scores for an input utterance tested against reference data for eight speakers. Speaker 1 is the true speaker, but the scores for some of the other speakers are sufficiently close to reduce significantly the degree of confidence that the system has identified the correct speaker. Fig. 11(b) shows equivalent results obtained using a system in accordance with the present invention. It can be seen that the results for speaker 1 are much more clearly distinguished from the results of all of the other speakers 2 to 8.

The speaker modelling method employed in the preferred embodiments of the present invention is inherently simpler (and, in strict mathematical terms, cruder) than conventional techniques such as HMM and possible alternatives such as gaussian mixture models. However, the present applicants believe that the conventional use of "tight" statistical methods is inherently flawed and result in poor "real world" performance, and that, surprisingly, the relatively simpler statistical methods of the present invention are much more effective in practice. As previously noted, the temporal nature of HMM makes it susceptible to mimics, a problem which is avoided by the present invention. Further, the models of the present invention are ideally suited to enable analysis of the structure of the enrolled speaker data-set by model against model testing.

The ability to perform model against model comparisons by using the present speaker models provides two particular advantages. Firstly, this provides the ability to identify the most relevant impostors in the enrolled speaker data-set (i.e. those which are close to and uniformly distributed around a particular model) and to produce an effective and predictable speaker normalisation mechanism. VQ modelling involves choosing the size of the model; i.e. choosing the number of coefficients ("centres"). Once this has been done, the positions of the centres can be moved around until they give the best fit to all of the enrolment data vectors. This effectively means allocating a centre to a cluster of enrolment vectors, so each centre in the model represents a cluster of information important to the speaker identity.

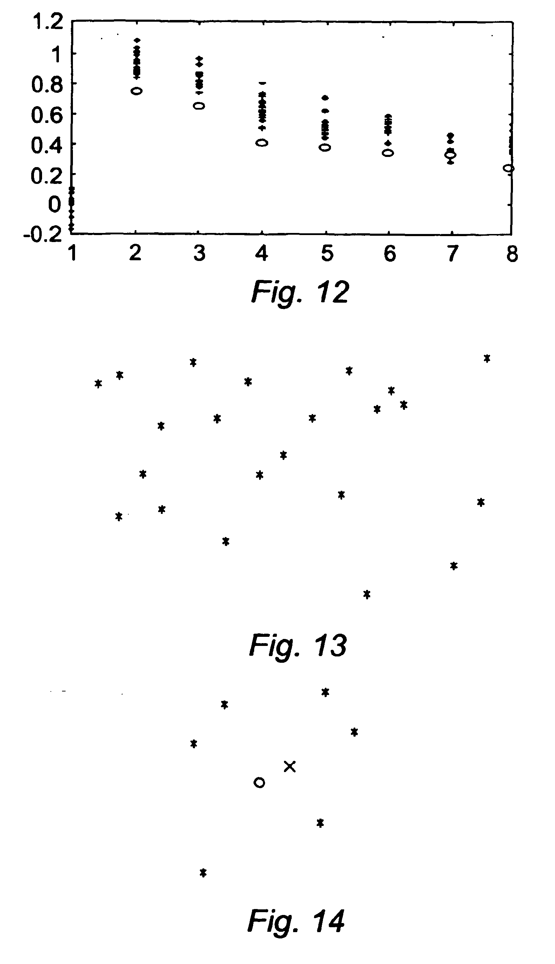

The model against model tests make it possible to predict how an enrolled speaker, or claimed identity, will perform against the database both in the broad sense and in an area local (in the system dataspace) to the claimed identity. Fig. 12 illustrates the results of testing reference models for speakers 2 to 8 against the reference model for speaker 1. The ellipses show the model against model results whilst the stars show actual scores for speaker utterances tested against model 1. It can be seen that the model against model tests can be used to predict the actual performance of a particular speaker against a particular reference model. The model against model results tend to lie at the bottom of the actual score distributions and therefore indicate how well a particular impostor will perform against model 1. This basic approach of using model against model tests to predict actual performance is known as such. As described further below, this approach may be extended in accordance with one aspect of the present invention to guard particular models against impostors using individually selected, statistically variable groupings.

The second advantage derived from model against model testing is the ability to predict the performance of a test utterance against some or, if need be, all of the enrolled speaker models. This enables a virtually unlimited number of test patterns to be used to confirm an identity, which is not possible with conventional systems.

In addition, the model against model test results may be used to assemble a specific impostor cohort for use with each reference model. This allows accurate score normalisation and also allows each model to be effectively "guarded" against impostors by using a statistically variable grouping which is selected for each enrolled speaker. This is illustrated by Fig. 13. Each reference model can be regarded as a point in a multi-dimensional dataspace, so that "distances" between models can be calculated. Fig. 13 illustrates this idea in two dimensions for clarity, where each star represents a model and the two-dimensional distance represents the distance between models.

It can be seen that the distribution of speaker models is not uniform, so that a world-model based normalisation technique will not operate equally well for all speaker models. It can also be seen that some speaker models can be relatively close to one another, which implies that there is potential for impostors to successfully impersonate enrolled speakers. For each speaker model, these issues can be resolved by creating a specific cohort of impostors around the subject model. This simplifies normalisation and creates a guard against impostors. This is illustrated in Fig. 14, which shows, in a similar manner to Fig. 13, a subject model represented by a circle, members of an impostor cohort represented by stars, and a score for an impostor claiming to be the subject, represented by an "x". The impostor score is sufficiently close to the subject model to cause recognition problems. However, because the speaker data-set enables prediction of how the true subject speaker will perform against the models of the impostor cohort, this information can be used to distinguish the impostor x from the true subject, by testing the impostor against the models of the cohort members as well as against the true subject model. That is, it can be seen that the impostor utterance x is closer to some of the cohort members than would be expected for the true subject, and further away from others than expected. This would indicate an impostor event and result in the impostor utterance being rejected as a match for the true subject.

This provides the basis for a two stage recognition process which firstly rejects impostors who are clearly not the claimed speaker followed, where necessary, by a more detailed process applied to utterances which are close enough to possibly be the claimed speaker.

In certain applications of speaker verification systems, it is important to minimise the possibility of "false rejections"; i.e. instances in which the identity claimed by a user is incorrectly rejected as being false. In accordance with one aspect of the invention, an "identifier strategy" is employed which provides very low false rejections, whilst also providing predictable system performance and minimising problems associated with the use of thresholds in accepting or rejecting a claimed identity.

In accordance with this strategy, the database of enrolled speakers (the "speaker space") is partitioned; e.g. so that each speaker enrolled in the system is assigned to a cohort comprising a fixed number N of enrolled speakers, as described above. The speaker classification module of the system (e.g. the module 110 in the system of Fig. 4) operates such that the input test utterance is compared with all of the members of the cohort associated with the identity claimed by the speaker, and the test utterance is classified as corresponding to that member of the cohort which provides the best match. That is, the test utterance is always matched to one member of the cohort, and will never be deemed not to match any member of the cohort. If the cohort member to which the utterance is matched corresponds to the claimed identity, then the claimed identity is accepted as true. If the utterance is matched to any other member of the cohort then the claimed identity is rejected as false.

The modelling and classification processes can be tuned such that the proportion of false rejections is effectively zero (FR = 0%) (as discussed above); i.e. there is substantially zero probability that a speaker will be wrongly identified as a member of the cohort other than the claimed identity. This is facilitated by the use of model against model comparisons such that a match is not based simply upon the test utterance being matched against the single closest model, but also on the basis of its relationship to other members of the cohort. Where the cohort is of a fixed size N, the maximum possible proportion of false acceptances FA = 100/N % and the total average error rate = (FA + FR)/2 = 50/N %. If the cohort size N is 20, the error rate is thus 2.5 %; i.e. an accuracy of 97.5 %. If the cohort size is fixed, the system is scalable to any size of population while maintaining a fixed and predictable error rate. That is, the accuracy of the system is based on the size of the cohort and is independent of the size of the general population, making the system scalable to very large populations. Accuracy can be improved by increasing the cohort size, as long as the false rejection rate does not increase significantly.

This strategy does not rely on the use of thresholds to determine a result, but thresholds could still be used to reduce false acceptances; i.e. once a test utterance has been matched to the claimed identity using the foregoing strategy, thresholds could be applied to determine whether the match is close enough to be finally accepted.

As indicated above, the selection of an impostor cohort associated with a particular enrolment model may involve the use of algorithms so that the members of the impostor cohort have a particular relationship with the enrolment model in question. In principle, this may provide a degree of optimisation in the classification process. However, it has been found that a randomly selected impostor cohort performs equally well for most practical purposes. The most important point is that the cohort size should be predetermined in order to give predictable performance. The impostor cohort for a particular enrolment model may be selected at the time of enrolment or at the time of testing a test utterance.

Parallel Classification

The performance of a speaker recognition system in accordance with the invention may be improved by the use of multiple parallel classification processes. Generally speaking, such processes will be statistically independent or partially independent. This approach will provide multiple classification results which can be combined to derive a final result, as illustrated in Fig. 5.

In one example, using the identifier strategy described above, the same test utterance may be tested against a number of different cohorts, or against different enrolment phrases, or combinations thereof. Where multiple cohorts are employed, each cohort will give a result with a false rejection rate of essentially zero (FR = 0 %) and a false acceptance rate FA = 100/N % as before. The overall false acceptance rate for n cohorts of equal size will be

$$FA = 100 * M/N^n \%$$

and the average error rate = $50*M/N^n$ %, where M is a coefficient having a value greater than 1 and representing the effect of the processes not being entirely statistically independent. That is, with 2 cohorts and a cohort size of 20, the average error rate will be 0.125*M % as compared with 2.5 % for a single cohort as described above. Thresholds may also be applied to further improve accuracy as previously described.

Other types of partially statistically independent processes may be employed in the modelling process, the classification process or both as previously discussed. Besides the examples previously given, a single utterance may be divided into parts and processed separately.

NORMALISATION

A further problem encountered with conventional speaker recognition systems is that system performance may be affected by differences between speech sampling systems used for initial enrolment and subsequent recognition. Such differences arise from different transducers (microphones), soundcards etc. In accordance with a further example, these difficulties can be obviated or mitigated by normalising speech samples on the basis of a normalisation characteristic which is obtained and stored for each sampling system (or, possibly, each type of sampling system) used to input speech samples to the recognition system. Alternatively (preferably), the normalisation characteristic can be estimated "on the fly" when a speech sample is being input to the system. The normalisation characteristic(s) can then be applied to all input speech samples, so that reference models and test scores are independent of the characteristics of particular sampling systems. Alternatively or additionally a normalisation process can be applied at the time of testing test sample data against enrolment sample data.

A normalisation characteristic is effectively a transfer function of the sampling system and can be derived, for example, by inputting a known reference signal to the sampling system, and processing the sampled reference signal through the speech recognition system. The resulting output from the recognition system can then be stored and used to normalise speech samples subsequently input through the same sampling system or the same type of sampling system.

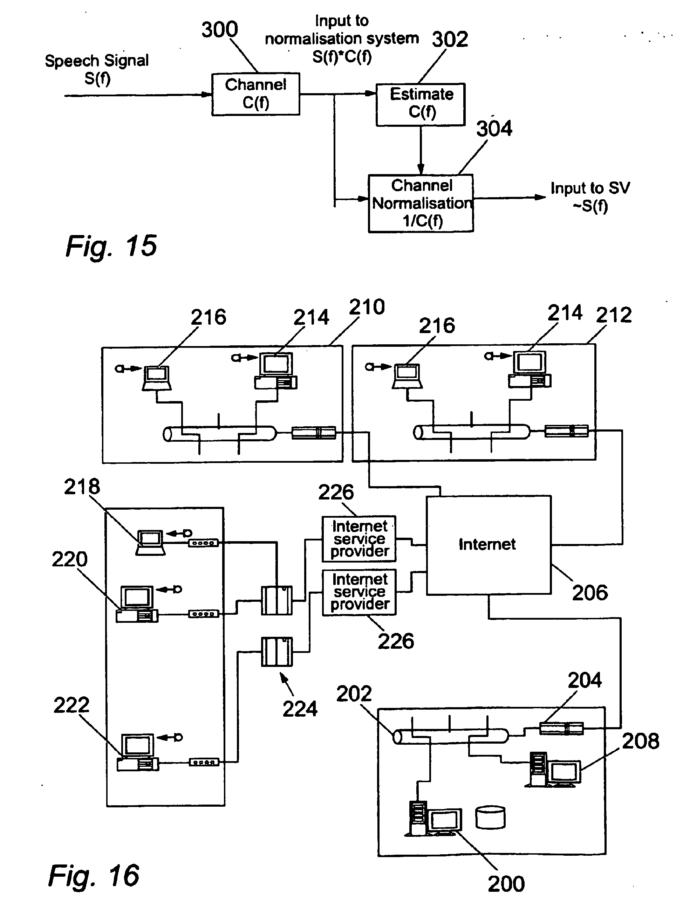

Alternatively, as illustrated in Fig. 15, a speech signal S(f) which has been modified by the transfer function C (f) of an input channel 300 can be normalised on the fly by inputting the modified speech signal S(f)*C(f) to an estimating module 302, which estimates the transfer function C(f) of the channel 300, and to a normalisation module 304, and applying the inverse of the estimated transfer function 1/C(f) to the normalisation module, so that the output from the normalisation module closely approximates the input signal S(f). The estimator module 302 creates a digital filter with the spectral characteristics of the channel 300 and the inverse of this filter is used to normalise the signal. For example, the inverse filter can be calculated by determining the all-pole filter which represents the spectral quality of a sample frame. The filter coefficients are then smoothed over the frames to remove as much of the signal as possible, leaving the spectrum of the channel (C(f)). The estimate of the channel spectrum is then used to produce the inverse filter 1/C (f). This basic approach can be enhanced to smooth the positions of the poles of the filters obtained for the frames, with intelligent cancellation of the poles to remove those which are known not to be concerned with the channel characteristics.

Depending on the nature of the transfer function/normalisation characteristic, the normalisation process can be applied to the speech sample prior to processing by the speaker recognition system or to the spectral data or to the model generated by the system.

A preferred method of channel normalisation, in accordance with one aspect of the invention, is applied to the test model data and the relevant enrolment models at the time of testing the test sample against the enrolment models.

The overall effect of the channel characteristics on a speech signal could be described as

$$\hat{s}(\omega) = ss(\omega) \times sd(\omega) \times cc(\omega)$$

where $\hat{s}(\omega)$ is the estimate of the speakers characteristics, $cc(\omega)$ is the channel characteristic or changed channel characteristic as appropriate, and the speech signal is treated as comprising a static part and a dynamic part as before. Ideally the unwanted channel characteristic can be estimated and removed. In practice the removal can be achieved in the time domain, frequency domain or a combination. They both achieve the same effect, that is to estimate $cc(\omega)$ and remove it using some form of inverse filter or spectral division. If $\hat{cc}(\omega)$ is the estimate of the spectrum of the unwanted channel then we would calculate

$$\frac{\hat{s}(\omega)}{\hat{cc}(\omega)} = ss(\omega) \times sd(\omega) \times \frac{cc(\omega)}{\hat{cc}(\omega)} \approx s(\omega)$$

If the estimation of the channel characteristic is good $\dfrac{cc(\omega)}{\hat{cc}(\omega)} \approx 1$ and our estimate of the speech is good with the unwanted spectral shaping removed. This would normally be implemented using a algorithm based on the FFT.

An alternative implementation is to model the channel characteristic as a filter, most likely in the all-pole form,

$$h(z) = \frac{z^N}{z^N + a_{N-1}z^{N-1} + \ldots\ldots a_0}$$

This is the most basic form of the ARMA and would normally be extracted from the time signal directly, possibly using Linear Prediction.

A similar normalisation could be carried out on the Cepstral representation.

In the Cepstral domain the speech signal is represented as

$$c(\tau) = cs(\tau) + cd(\tau)$$

and the speech signal modified by the unwanted channel characteristics is

$$\hat{c}(\tau) = cs(\tau) + cd(\tau) + cc(\tau)$$

It can be seen that in this case we have an additive process rather than a product. But it should also be remembered that both cs and cc are static and we may need to remove one cc without removing the other.

It is important to consider the context in which we would wish to remove the signal cc and their different conditions (enrolled model, database derived cohort, test speaker etc.).

Figure 16 illustrates various sources of corruption of a speech sample in a speaker recognition system. The input speech signal s(t) is altered by environmental background noise, b(t), the recording device bandwidth, r(t), electrical noise and channel crosstalk, t(t), and transmission channel bandwidth, c(t), so that the signal input to the recognition system is an altered signal v(t). The system is easier to analyse in the frequency domain and the signal at the verifier is:

$$v(\omega) = ((s(\omega) + b(\omega)).r(\omega) + t(\omega)).c(\omega) \qquad \texttt{eq1}$$

At the verifier we can define two conditions, when the person is speaking and when he is not. Resulting in two equations,

$$v(\omega) = ((s(\omega) + b(\omega)).r(\omega) + t(\omega)).c(\omega)$$

and

$$v(\omega) = ((0 + b(\omega)).r(\omega) + t(\omega)).c(\omega)$$

First consider the simplified problem as it applies to the systems in accordance with the present invention; assume that b(t)=t(t)=0

$$v(\omega) = s(\omega).r(\omega).c(\omega) = s(\omega).h(\omega)$$

where h( ) is the combined channel spectral characteristic,

$$h(\omega) = r(\omega).c(\omega)$$

$$v(\omega) = s(\omega).h(\omega) = ss(\omega).sd(\omega).h(\omega)$$

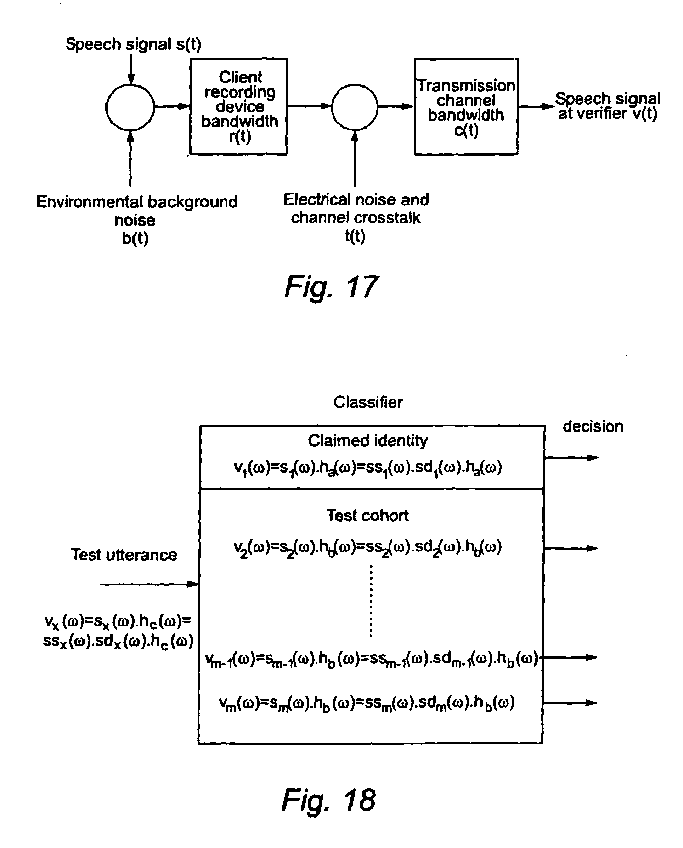

The cohort models are selected from the database of speakers recorded using the same channel (b) and the true speaker model is recorded using a different channel (a). The test speaker can either be the true speaker or an impostor and will be recorded using a third channel (c). Figure 17 shows this diagrammatically. Fig. 18 shows the same thing expressed in the alternate form using the Cepstral coefficients. It should be remembered that the values of the signal components as represented in Figs 17 and 18 are averages corresponding to the summations of sample frame data.
Consider the claimed identity model, which was built from,

$$v_1(\tau) = cs_1(\tau) + cd_1(\tau) + h_a(\tau) \qquad \texttt{eq2}$$

and the cohort models which were built from,

$$v_m(\tau) = cs_m(\tau) + cd_m(\tau) + h_b(\tau) \qquad \texttt{eq3}$$

The problem for the verifier is that there are two different channels used in the identifier and if we assume the difference between them is

$$\mathbf{hd}(\tau) = \mathbf{h}_a(\tau) - \mathbf{h}_b(\tau)$$

or

$$\mathbf{h}_a(\tau) = \mathbf{h}_b(\tau) + \mathbf{hd}(\tau)$$

then the claimed identity model referred to the cohort channel (b) will be

$$\mathbf{v}_1(\tau) = \mathbf{cs}_1(\tau) + \mathbf{cd}_1(\tau) + \mathbf{h}_a(\tau) = \mathbf{cs}_1(\tau) + \mathbf{cd}_1(\tau) + \mathbf{h}_b(\tau) + \mathbf{hd}(\tau)$$

and

$$\mathbf{v}_1(\tau) = (\mathbf{cs}_1(\tau) + \mathbf{hd}(\tau)) + \mathbf{cd}_1(\tau) + \mathbf{h}_b(\tau)$$

it can be seen that the mean of the static part of the claimed identity model has been shifted by the difference between the channels and will cause an error if the true speaker is tested using channel-b if the situation is not corrected. Similar problems involving false acceptances using channel-a will also occur.

One method of addressing this problem is to remove the mean from the claimed identity model, but a simple removal of the mean would at first glance produce,

$$\mathbf{v}_1(\tau) = \mathbf{cd}_1(\tau)$$

where the static part of the speaker model has also been removed. However, examining equation 1 (the system model including additive noise)

$$\mathbf{v}(\omega) = ((\mathbf{s}(\omega) + \mathbf{b}(\omega)).\mathbf{r}(\omega) + \mathbf{t}(\omega)).\mathbf{c}(\omega)$$

if we consider the case during which the speaker pauses, $s(\omega)=0$
then

$$\mathbf{v}(\omega) = (\mathbf{b}(\omega).\mathbf{r}(\omega) + \mathbf{t}(\omega)).\mathbf{c}(\omega)$$

and

$$\mathbf{v}(\omega) = \mathbf{n}(\omega).\mathbf{c}(\omega)$$

where $n(\omega)$ is a noise signal.
In cepstral form this would be

$$v(\tau) = n(\tau) + c(\tau) = sn(\tau) + dn(\tau) + c(\tau)$$

where as before sn is the static part of the noise and dn is the result of the summation of the dynamic part.

The average of a model constructed from this would be

$$sn(\tau) + c(\tau)$$

where sn is any steady state noise such as an interference tone and c is the channel.

Considering again equationl (the claimed identity model build conditions)

$$v_1(\tau) = cs_1(\tau) + cd_1(\tau) + h_a(\tau)$$

this was the noise free case, adding a steady state noise gives,

$$v_1(\tau) = cs_1(\tau) + cd_1(\tau) + h_a(\tau) + sn(\tau)$$

If we constructed the speaker pause model for this case we would get

$$sn(\tau) + h_a(\tau)$$

and using this to remove the mean results in

$$v_1(\tau) = cs_1(\tau) + cd_1(\tau)$$

This gives us a model unbiased by the channel. A similar process could be applied to each model whereby it has the channel bias removed by its own silence model. The test speaker could be similarly treated, i.e. its silence model is used to remove the channel effects.

The removal (reduction) of the channel characteristics using the silence model as described above requires suitable channel noise and perfect detection of the silence parts of the utterance. As these cannot be guaranteed they need to be mitigated (for instance, if the silence includes some speech we will include some of the claimed identity speaker static speech and inadvertently remove it). Fortunately they can be dealt with in one simple modification to the process: the cohort models should all be referred to the same silence model.

That is, if we re-add the silence average of the claimed identity model to all of the models in the cohort (including the claimed identity model). This refers all of the models to the same mean $sn(\tau)+h_a(\tau)$. This normalisation is also applied to the test model, thereby referring all of the models and the test utterance to the same reference point. In effect we choose a reference channel and noise condition and refer all others to it.

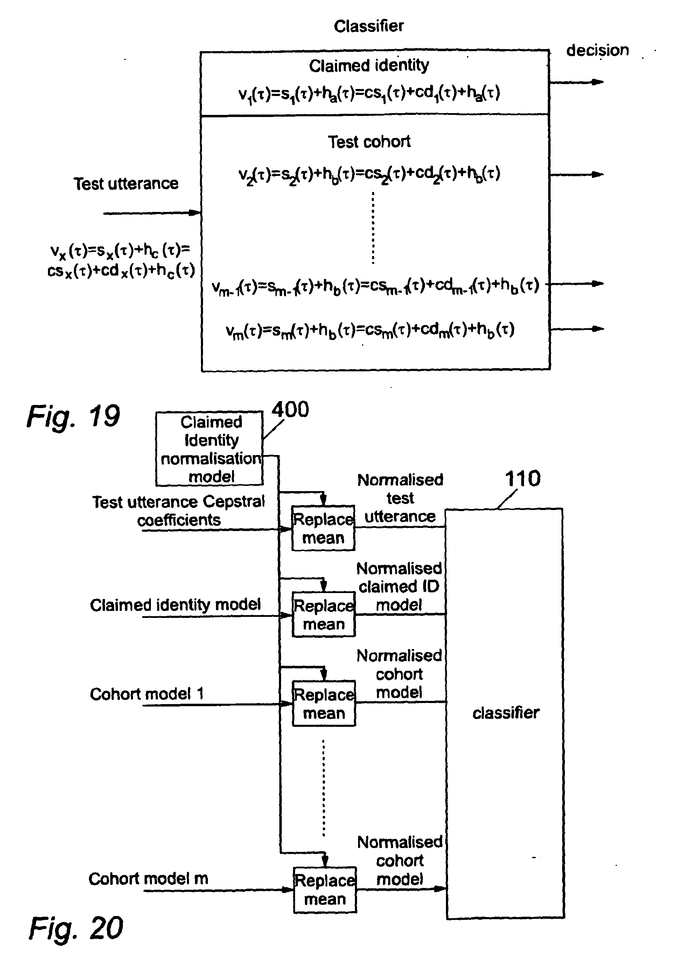

This is illustrated diagrammatically in Fig. 19, which shows the Cepstral coefficients of the test utterance together with the claimed identity model and the cohort models 1 to m being input to the classifier 110. A "silence model" or "normalisation model" 400 derived from the claimed identity enrolment data is used to normalise each of these before input to the classifier, so that the actual inputs to the classifier are a normalised test utterance, normalised claimed identity model and normalised cohort models. Ideally, the normalisation model 400 is based on data from periods of silence in the claimed identity enrolment sample as discussed above, but it could be derived from the complete claimed identity enrolment sample. In practical terms, the normalisation model comprises a single row of Cepstral coefficients, each of which is the mean value of one column (or selected members of one column) of Cepstral coefficients from the claimed identity model. These mean values are used to replace the mean values of each of the sets of input data. That is, taking the test utterance as an example, the mean value of each column of the test utterance Cepstral coefficients is subtracted from each individual member of that column and the corresponding mean value from the normalisation model is added to each individual member of the column. A similar operation is applied to the claimed identity model and each of the cohort models.

It will be understood that the normalisation model could be derived from the claimed identity model or from the test utterance or from any of the cohort models. It is preferable for the model to be derived from either the claimed identity model or the test utterance, and it is most preferable for it to be derived from the claimed identity model. The normalisation model could be derived from the "raw" enrolment sample Cepstral coefficients or from final model after Vector Quantisation. That is, it could be derived at the time of enrolment and stored along with the enrolment model or it could be calculated when needed as part of the verification process. Generally, it is preferred that a normalisation model is calculated for each enrolled speaker at the time of enrolment and stored as part of the enrolled speaker database.

These normalisation techniques can be employed with various types of speaker recognition systems but are advantageously combined with the speaker recognition systems of the present invention.

Speaker recognition systems in accordance with the invention provide improved real world performance for a number of reasons. Firstly, the modelling techniques employed significantly improve separation between true speakers and impostors. This improved modelling makes the system less sensitive to real world problems such as changes of sound system (voice sampling system) and changes of speaker characteristics (due to, for example, colds etc.). Secondly, the modelling technique is non-temporal in nature so that it is less susceptible to temporal voice changes, thereby providing longer persistence of speaker models. Thirdly, the use of filter pre-processing allows the models to be used for variable bandwidth conditions; e.g. models created using high fidelity sampling systems such as multimedia PCs will work with input received via reduced bandwidth input channels such as telephony systems.

It will be understood that the preferred methods in accordance with the present invention are inherently suited for use in text-independent speaker recognition systems as well as text-dependent systems.

SYSTEMS

The invention thus provides the basis for flexible, reliable and simple voice recognition systems operating on a local or wide area basis and employing a variety of communications/input channels. Fig. 16 illustrates one example of a wide area system operating over local networks and via the Internet, to authenticate users of a database system server 400, connected to a local network 402, such as an Ethernet network, and, via a router 404, to the Internet 406. A speaker authentication system server 408, implementing a speaker recognition system in accordance with the present invention, is connected to the local network for the purpose of authenticating users of the database 400. Users of the system may obviously be connected directly to the local network 402. More generally, users at sites such as 410 and 412 may access the system via desktop or laptop computers 414, 416 equipped with microphones and connected to other local networks which are in turn connected to the Internet 406. Other users such as 418, 420, 422 may access the system by dial-up modem connections via the public switched telephone network 424 and Internet Service Providers 426.

IMPLEMENTATION

The algorithms employed by speaker recognition systems in accordance with the invention may be implemented as computer programs using any suitable programming language such as C or C++, and executable programs may be in any required form including stand alone applications on any hardware/operating system platform, embedded code in DSP chips etc. (hardware/firmware implementations), or be incorporated into operating systems (e.g. as MS Windows DLLs). User interfaces (for purposes of both system enrolment and subsequent system access) may similarly be implemented in a variety of forms, including Web based client server systems and Web browser-based interfaces, in which case speech sampling may be implemented using, for example, ActiveX/Java components or the like.

Apart from desktop and laptop computers, the system is applicable to other terminal devices including palmtop devices, WAP enabled mobile phones etc. via cabled and/or wireless data/telecommunications networks.

APPLICATIONS

Speaker recognition systems having the degree of flexibility and reliability provided by the present invention have numerous applications. One particular example, in accordance with a further aspect of the present invention, is in providing an audit trail of users accessing and/or modifying digital information such as documents or database records. Such transactions can be recorded, providing information regarding the date/time and identity of the user, as is well known in the art. However, conventional systems do not normally verify or authenticate the identity of the user.

Speaker recognition, preferably using a speaker recognition system in accordance with the present invention, may be used to verify the identity of a user whenever required; e.g. when opening and/or editing and/or saving a digital document, database record or the like. The document or record itself may be marked with data relating to the speaker verification procedure, or such data may be recorded in a separate audit trail, providing a verified record of access to and modification of the protected document, record etc. Unauthorised users identified by the system will be denied access or prevented from performing actions which are monitored by the system.

Improvements and modifications may be incorporated without departing from the scope of the invention as defined in the appended claims.

**Claims**

1. A method of speaker verification that uses a plurality of cohorts, each cohort including an enrolment model for each of a predetermined number of speakers, each enrolment model representing at least one speech sample for each speaker, the method comprising:

   capturing a test speech sample from a speaker claiming to be one of the enrolled speakers;
   modeling the test sample to provide a test model; and
   classifying the test model by always matching it with one of the enrolment models of the cohort associated with the claimed speaker so that a false acceptance rate for the test sample is determined by the cohort size,

   wherein the steps of modelling and/or classifying are such that a false rejection rate for the test sample is substantially zero.

2. A method as claimed in claim 1 further comprising:

   providing for each speaker of the cohort multiple enrolment models determined using multiple parallel modelling processes;
   applying the multiple parallel modelling processes to the test sample to provide corresponding multiple test models, and
   classifying each test model by matching it with one of the correspondingly modelled enrolment models of the cohort.

3. A method as claimed in claim 2 wherein the parallel modelling processes comprise applying to the speech samples at least one of different frequency banding; different spectral modelling and different clustering.

4. A method as claimed in any of the preceding claims wherein the step of classifying involves applying multiple parallel classification processes to the or each test models.

5. A method as claimed in claim 4 wherein the parallel classification processes comprise testing the test model against different cohorts of enrolled speakers or different utterances represented by the enrolment models.

6. A method as claimed in any of the preceding claims further comprising adding a known noise or another known signal to the test speech sample to produce a modified test sample, wherein the step of modelling is done on the modified test sample.

7. A speaker verification system that uses a plurality of cohorts, each cohort including an enrolment model for each of a predetermined number of speakers, each enrolment model representing at least one speech sample for each speaker, the system comprising means for capturing a test speech sample from a speaker claiming to be one of the enrolled speakers; means for modelling the test sample to provide a test model; and means for classifying the test model by matching it with one of the enrolment models of the cohort associated with the claimed speaker so that a false acceptance rate for the test sample is determined by the cohort size, wherein the means for modelling and/or classifying are such that a false rejection rate for the test sample is substantially zero.

8. A system as claimed in claim 7 wherein each speaker of the cohort has multiple enrolment models determined using multiple parallel modelling processes and means are provided for applying the multiple parallel modelling processes to the test sample to provide corresponding multiple test models, and classifying each test model by matching it with one of the correspondingly modelled enrolment models of the cohort.

9. A system as claimed in claim 8 wherein the parallel modelling processes are operable to apply to the speech samples at least one of different frequency banding; different spectral modelling and different clustering.

10. A system as claimed in any of claims 7 to 9 wherein the means for classifying are operable to apply multiple parallel classification processes to the or each test model.

11. A system as claimed in claim 10 wherein the parallel classification processes are operable to test the test model against different cohorts of enrolled speakers or different utterances represented by the enrolment models.

12. A system as claimed in any of claims 7 to 11 further comprising means for adding a known noise or another known signal to the test speech sample to produce a modified test sample, wherein the means for modelling are operable to act on the modified test sample.

**Patentansprüche**

1. Verfahren zur Sprecherverifizierung, das eine Vielzahl an Kohorten verwendet, wobei jede Kohorte ein Registrierungsmodell für jeden einer zuvor festgelegten Anzahl von Sprechern einschließt, wobei jedes Registrierungsmodell mindestens eine Sprachprobe für jeden Sprecher darstellt, wobei das Verfahren Folgendes umfasst:

Erfassen einer Testsprachprobe von einem Sprecher, der vorgibt, einer der registrierten Sprecher zu sein;
Modellieren der Testprobe, um ein Testmodell zu erhalten; und
Klassifizieren des Testmodells, indem es immer mit einem der Registrierungsmodelle der Kohorte, das dem vorgegebenen Sprecher zugeordnet ist, in Übereinstimmung gebracht wird, so dass eine Falschakzeptanzrate für die Testprobe durch die Kohortengröße bestimmt wird,

wobei die Schritte des Modellierens und/oder Klassilizierens so ausgeführt werden, dass eine Falschablehnungsrate für die Testprobe im Wesentlichen null ist.

2. Verfahren nach Anspruch 1, das des Weiteren Folgendes umfasst:

Bereitstellen - für jeden Sprecher der Kohorte - von mehreren Registrierungsmodellen, die mittels mehrerer paralleler Modellierungsprozesse bestimmt werden;
Anwenden der mehreren parallelen Modellierugsprozesse auf die Testprobe, um entsprechende mehrere Testmodelle zu erzeugen, und
Klassifizieren jedes Testmodells, indem es mit einem der entsprechend modellierten Registrierungsmodelle der Kohorte in Übereinstimmung gebracht wird.

3. Verfahren nach Anspruch 2, wobei die parallelen Modellierungsprozesse das Anwenden anderer Frequenzbänder und/oder einer anderen Spektralmadellierung und/oder einer anderen Clusterbildung auf die Sprachproben umfassen.

4. Verfahren nach einem der vorangehenden Ansprüche, wobei der Schritt des Klassifizierens das Anwenden mehrerer paralleler Klassifizierungsprozesse auf das oder jedes Testmodell beinhaltet.

5. Verfahren nach Anspruch 4, wobei die parallelen Klassifizieningsprozesse das Testen des Testmodells anhand unterschiedlicher Kohorten aus registrierten Sprechern oder unterschiedlichen Aussprachen, die durch die Registrierungsmodelle dargestellt werden, umfassen.

6. Verfahren nach einem der vorangehenden Ansprüche, das des Weiteren das Hinzufügen eines bekannten Geräuschs oder eines anderen bekannten Signals zu der Testsprechprobe umfasst, um eine modifizierte Testprobe zu erzeugen, wobei der Schritt des Modellierens an der modifizierten Testprobe ausgeführt wird.

7. Sprecherverifizierungssystem, das eine Vielzahl an Kohorten verwendet, wobei jede Kohorte ein Registrierungsmodell für jeden einer zuvor festgelegten Anzahl von Sprechern einschließt, wobei jedes Registrierungsmodell mindestens eine Sprachprobe für jeden Sprecher darstellt, wobei das System Folgendes umfasst: ein Mittel zum Erfassen einer Testsprachprobe von einem Sprecher, der vorgibt, einer der registrierten Sprecher zu sein; ein Mittel zum Modellieren der Testprobe, um ein Testmodell zu erhalten; und ein Mittel zum Klassifizieren des Testmodells, indem es mit einem der Registrierungsmodelle der Kohorte, die dem vorgegebenen Sprecher zugeordnet ist, in Übereinstimmung gebracht wird, so dass eine Falschakzeptanzrate für die Testprobe durch die Kohortengröße bestimmt wird, wobei das Mittel zum Modellieren und/oder Klassifizieren so konfiguriert ist, dass eine Falschablehnungsrate für die Testprobe im Wesentlichen null ist.

**8.** System nach Anspruch 7, wobei jeder Sprecher der Kohorte mehrere Registrierungsmodelle hat, die mittels mehrerer paralleler Modellierungsprozesse bestimmt werden, und Mittel bereitgestellt sind, um die mehreren parallelen Modellierungsprozesse auf die Testprobe anzuwenden, um entsprechende mehrere Testmodelle zu erzeugen, und um jedes Testmodell zu klassifizieren, indem es mit einem der entsprechend modellierten Registrierungsmodelle der Kohorte in Übereinstimmung gebracht wird.

**9.** System nach Anspruch 8, wobei die parallelen Modellierungsprozesse dafür geeignet sind, andere Frequenzbänder und/oder eine andere Spektralmodellierung und/oder eine andere Clusterbildung auf die Sprachproben anzuwenden.

**10.** System nach einem der Ansprüche 7 bis 9, wobei das Mittel zum Klassifizieren dafür geeignet ist, mehrere parallele Klassifizierungsprozesse auf das oder jedes Testmodell anzuwenden.

**11.** System nach Anspruch 10, wobei die parallelen Klassifiziemngsprozesse dafür geeignet sind, das Testmodell anhand unterschiedlicher Kohorten aus registrierten Sprechern oder unterschiedlichen Aussprachen, die durch die Registrierungsmodelle dargestellt werden, zu testen.

**12.** System nach einem der Ansprüche 7 bis 11, das des Weiteren ein Mittel zum Hinzufügen eines bekannten Geräuschs oder eines anderen bekannten Signals zu der Testsprechprobe umfasst, um eine modifizierte Testprobe zu erzeugen, wobei das Mittel zum Modellieren dafür geeignet ist, mit der modifizierten Testprobe zu arbeiten.

## Revendications

**1.** Procédé de vérification d'un locuteur qui utilise une pluralité de cohortes, chaque cohorte incluant un modèle d'enrôlement pour chacun d'un nombre prédéterminé de locuteurs, chaque modèle d'enrôlement représentant au moins un échantillon de la parole pour chaque locuteur, le procédé comprenant les étapes consistant à:

capturer un échantillon test de la parole d'un locuteur déclarant être un des locuteurs enrôlés;
modéliser l'échantillon de test pour fournir un modèle de test;
et
classifier le modèle de test en le faisant toujours correspondre à un des modèles d'enrôlement de la cohorte associée au locuteur déclaré, de sorte qu'un taux d'acceptation d'erreur pour l'échantillon de test est déterminé par la taille de la cohorte,

dans lequel les étapes de modélisation et/ou de classification sont telles qu'un taux de réjection d'erreur pour l'échantillon de test est sensiblement égal à zéro.

**2.** Procédé selon la revendication 1, comprenant, en outre, les étapes consistant à:

fournir pour chaque locuteur de la cohorte, de multiples modèles d'enrôlement déterminés en utilisant de multiples traitements de modélisation en parallèle;
appliquer les multiples traitements de modélisation en parallèle à l'échantillon de test pour procurer des multiples modèles de test correspondant, et
classifier chaque modèle de test en le faisant correspondre à un des modèles d'enrôlement modélisé de manière correspondante de la cohorte.

**3.** Procédé selon la revendication 2, dans lequel les traitements de modélisation en parallèle comprennent l'application des échantillons de la parole à au moins une des bande de fréquence différente, modélisation spectrale différente et groupement différent.

**4.** Procédé selon l'une quelconque des revendications précédentes, dans lequel l'étape de classification implique l'application de multiples traitements ou de classification en parallèle aux modèles de test ou à chaque modèle de test.

**5.** Procédé selon la revendication 4, dans lequel des traitements de classification en parallèle comprennent le test de modèle de test vis-à-vis des différentes cohortes de locuteurs enrôlés ou de prononciations différentes représentées par les modèles d'enrôlement.

**6.** Procédé selon l'une quelconque des revendications précédentes comprenant, en outre, l'ajout d'un bruit connu ou autre signal connu à l'échantillon de test de la parole pour produire un échantillon de test modifié, dans lequel l'étape de modélisation est effectuée sur l'échantillon de test modifié.

**7.** Système de vérification d'un locuteur qui utilise une pluralité de cohortes, chaque cohorte incluant un modèle d'enrôlement pour chacun d'un nombre prédéterminé de locuteurs, chaque modèle d'enrôlement représentant au moins un échantillon de la parole pour chaque locuteur, le système comprenant un moyen pour capturer un échantillon de test de la parole d'un locuteur se déclarant être un des locuteurs enrôlés; un moyen pour modéliser l'échantillon de test pour procurer un modèle de test; et un moyen pour classifier le modèle de test en le faisant correspondre à un des modèles d'enrôlement de la cohorte associée au locuteur déclaré, de sorte qu'un taux d'acceptation d'erreur pour l'échantillon de test est déterminé par la taille de la cohorte, dans lequel le moyen pour la modélisation et/ou la classification est tel qu'un taux de réjection d'erreur pour l'échantillon de test est sensiblement égal à zéro.

**8.** Système selon la revendication 7, dans lequel chaque locuteur de la cohorte a de multiples modèles d'enrôlement déterminés en utilisant de multiples traitements de modélisation en parallèle et des moyens sont procurés pour appliquer les multiples traitements de modélisation en parallèle à l'échantillon de test pour fournir des multiples modèles de test correspondants, et la classification de chaque modèle de test en le faisant correspondre à un des modèles d'enrôlement modélisé de manière correspondante de la cohorte.

**9.** Système selon la revendication 8, dans lequel les traitements de modélisation en parallèle sont mis en oeuvre pour appliquer aux échantillons de la parole au moins un d'une bande de fréquence différente, d'une modélisation spectrale différente et d'un groupement différent.

**10.** Système selon l'une quelconque des revendications 7 à 9, dans lequel les moyens pour la classification peuvent être mis en oeuvre pour appliquer de multiples traitements de classification en parallèle aux modèles ou à chaque modèle de test.

**11.** Système selon la revendication 10, dans lequel les traitements de classification en parallèle peuvent être mis en oeuvre pour tester le modèle de test vis-à-vis de différentes cohortes de locuteurs enrôlés ou de prononciations différentes représentées par les modèles d'enrôlement

**12.** Système selon l'une quelconque des revendications 7 à 11, comprenant, en outre, des moyens pour ajouter un bruit connu ou autre signal connu à l'échantillon de test de la parole pour produire un échantillon de test modifié, dans lequel les moyens pour la modélisation peuvent être mis en oeuvre pour agir sur l'échantillon de test modifié.

**Fig. 1**

test utterance → Filter → LPCC → HMM → score normalisation and speaker thresholding → decision

16

10 12 14

18

world model or imposter cohort

**Fig. 2**
**PRIOR ART**

**Fig. 3**

score vs speaker

EP 1 399 915 B1

Fig. 4

Fig. 5

Fig. 6

27

*Fig. 7*

*Fig. 8a*

———— Frame spectrum
———— Smoothed frame spectrum

*Fig. 8b*

———— Frame 1
———— Frame 2

*Fig. 9*

Fig. 10

Fig. 11b

Fig. 11a

Fig. 12

Fig. 13

Fig. 14

## Fig. 15

Speech Signal
S(f)

Input to
normalisation system
S(f)*C(f)

300 Channel C(f)

302 Estimate C(f)

304 Channel Normalisation 1/C(f)

Input to SV
~S(f)

## Fig. 16

216  214  210  216  214  212

218

220

222

226 Internet service provider

226 Internet service provider

Internet

206

224

202  204  208

200

Speech signal s(t)

Client recording device bandwidth r(t)

Transmission channel bandwidth c(t)

Speech signal at verifier v(t)

Environmental background noise b(t)

Electrical noise and channel crosstalk t(t)

*Fig. 17*

Classifier

decision

Claimed identity

$v_1(\omega) = s_1(\omega).h_a(\omega) = ss_1(\omega).sd_1(\omega).h_a(\omega)$

Test cohort

$v_2(\omega) = s_2(\omega).h_b(\omega) = ss_2(\omega).sd_2(\omega).h_b(\omega)$

Test utterance

$v_x(\omega) = s_x(\omega).h_c(\omega) = ss_x(\omega).sd_x(\omega).h_c(\omega)$

$v_{m-1}(\omega) = s_{m-1}(\omega).h_b(\omega) = ss_{m-1}(\omega).sd_{m-1}(\omega).h_b(\omega)$

$v_m(\omega) = s_m(\omega).h_b(\omega) = ss_m(\omega).sd_m(\omega).h_b(\omega)$

*Fig. 18*

Classifier

decision

Claimed identity

$$v_1(\tau)=s_1(\tau)+h_a(\tau)=cs_1(\tau)+cd_1(\tau)+h_a(\tau)$$

Test cohort

$$v_2(\tau)=s_2(\tau)+h_b(\tau)=cs_2(\tau)+cd_2(\tau)+h_b(\tau)$$

Test utterance

$$v_x(\tau)=s_x(\tau)+h_c(\tau)=$$
$$cs_x(\tau)+cd_x(\tau)+h_c(\tau)$$

$$v_{m-1}(\tau)=s_{m-1}(\tau)+h_b(\tau)=cs_{m-1}(\tau)+cd_{m-1}(\tau)+h_b(\tau)$$

$$v_m(\tau)=s_m(\tau)+h_b(\tau)=cs_m(\tau)+cd_m(\tau)+h_b(\tau)$$

*Fig. 19*

Claimed Identity normalisation model      400

Test utterance Cepstral coefficients → Replace mean → Normalised test utterance

110

Claimed identity model → Replace mean → Normalised claimed ID model

Cohort model 1 → Replace mean → Normalised cohort model

Cohort model m → Replace mean → Normalised cohort model

classifier

*Fig. 20*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0821346 A

**Non-patent literature cited in the description**

- **J P CAMPBELL JR.** Speaker recognition: A tuturial. *Proc. of the IEEE,* September 1997, vol. 85 (9